# EUROPEAN PATENT APPLICATION

(11) **EP 4 496 276 A1**
(43) Date of publication of application: **22.01.2025**
(21) Application number: 22931464.6
(22) Date of filing: 18.03.2022
(51) Int. Cl.: H04L 25/02, H04W 74/00

(54) **CHANNEL ESTIMATION METHOD/APPARATUS/DEVICE AND STORAGE MEDIUM**

(71) Applicant: Beijing Xiaomi Mobile Software Co., Ltd., Beijing 100085 (CN)
(72) Inventor: CHI, Liangang, Beijing 100085 (CN)
(74) Representative: Dehns Germany Partnerschaft mbB
(86) International application number: PCT/CN2022/081802
(87) International publication number: WO 2023/173433

(57) **Abstract**

The present disclosure belongs to the technical field of communications. Provided are a channel estimation method/apparatus/device and a storage medium. The method comprises: determining configuration information, wherein the configuration information comprises a reference signal mode supported by a network device, and/or, reference signal configuration information of at least one reference signal corresponding to the reference signal mode supported by the network device; sending a request message to the network device, wherein the request message is used for requesting a reference signal mode, and/or, for requesting reference signal configuration information of at least one reference signal corresponding to a reference signal mode requested by a UE; acquiring a specified reference signal sent by the network device; and executing a corresponding operation on the basis of the specified reference signal, so as to perform channel estimation. The present disclosure provides a channel estimation method based on AI and/or ML, which can improve the channel estimation performance, and ensure the accuracy and precision of channel estimation.

## Description

### TECHNICAL FIELD

The present disclosure relates to the field of communication technologies, and in particular to a method/apparatus/device for estimating a channel and a storage medium.

### BACKGROUND

With the continuous development of Artificial Intelligent (AI) technologies and Machine Learning (ML) technologies, application fields (such as image recognition, speech processing, natural language processing, games, etc.) of the AI technologies and the ML technologies are becoming increasingly extensive. Based on this, the present disclosure provides a method for estimating a channel based on AI and/or ML to improve the channel estimation performance.

### SUMMARY

A method/apparatus/device for estimating a channel and a storage medium provided in the present disclosure implement channel estimation based on AI and/or ML, which can improve the channel estimation performance.

A method for estimating a channel provided in an aspect of embodiments of the present disclosure is performed by a User Equipment (UE) and configured for downlink channel estimation. The method includes:
determining configuration information, wherein the configuration information includes a reference signal mode supported by a network device and/or reference signal configuration information of at least one reference signal corresponding to the reference signal mode supported by the network device;
sending a request message to the network device, wherein the request message is configured to request a reference signal mode and/or to request reference signal configuration information of at least one reference signal corresponding to the reference signal mode requested by the UE;
acquiring a designated reference signal sent by the network device; and
performing a corresponding operation based on the designated reference signal to perform channel estimation.

In an embodiment of the present disclosure, the reference signal mode includes at least one of:
a first reference signal mode, wherein a reference signal corresponding to the first reference signal mode is configured to train an Artificial Intelligent (AI) model and/or to train a Machine Learning (ML) model, and wherein the AI model is configured to implement the channel estimation based on the reference signal, and the ML model is configured to implement the channel estimation based on the reference signal; or
a second reference signal mode, wherein a function of a reference signal corresponding to the second reference signal mode includes at least one of being configured to train the AI model, being configured to train the ML model, being configured to evaluate the AI model, being configured to evaluate the ML model, being configured to perform the channel estimation based on the AI model, or being configured to perform the channel estimation based on the ML model.

In an embodiment of the present disclosure, the reference signal configuration information includes at least one of:
a reference signal pattern of the reference signal; or
a reference signal sequence of the reference signal.

In an embodiment of the present disclosure, the method further includes:
reporting capability information to the network device, wherein the capability information is configured to indicate whether a capability for the channel estimation based on AI and/or ML is supported by the UE; and
the capability information is configured to indicate at least one of:
   whether an AI-based channel estimation capability is supported by the UE;
   whether a ML-based channel estimation capability is supported by the UE;
   whether data transmission during training of the AI model is supported by the UE; or
   whether data transmission during training of the ML model is supported by the UE.

In an embodiment of the present disclosure, the method for determining the configuration information includes at least one of:
determining the configuration information based on a protocol agreement; or
acquiring the configuration information sent by the network device.

In an embodiment of the present disclosure, the sending the request message to the network device includes:
sending the request message to the network device through a signaling.

In an embodiment of the present disclosure, the request message includes at least one of:
first indication information configured to indicate the reference signal mode requested by the UE;
second indication information configured to indicate the reference signal configuration information corresponding to the reference signal mode requested by the UE; or
a time domain position corresponding to the reference signal configuration information requested by the UE.

In an embodiment of the present disclosure, the request message includes at least one of:
first indication information configured to indicate the reference signal mode requested by the UE;
second indication information configured to indicate the reference signal configuration information corresponding to the reference signal mode requested by the UE;
a configuration period for the configuration information by the network device recommended by the UE;
a first time domain position of reference signal configuration information corresponding to the first reference signal mode within the configuration period recommended by the UE; or
a second time domain position of reference signal configuration information corresponding to the second reference signal mode within the configuration period recommended by the UE.

In an embodiment of the present disclosure, designated reference signal configuration information of the designated reference signal is the same as the reference signal configuration information requested by the UE.

In an embodiment of the present disclosure, the acquiring the reference signal sent by the network device includes:
acquiring the designated reference signal configuration information corresponding to the designated reference signal and/or a designated reference signal mode corresponding to the designated reference signal sent by the network device; and
acquiring the designated reference signal based on the designated reference signal configuration information or the reference signal configuration information requested by the UE.

In an embodiment of the present disclosure, the acquiring the reference signal sent by the network device includes:
when the designated reference signal configuration information corresponding to the designated reference signal and/or a designated reference signal mode corresponding to the designated reference signal sent by the network device are not received by the UE within a preset time period, acquiring the designated reference signal based on the reference signal configuration information requested by the UE.

In an embodiment of the present disclosure, the designated reference signal configuration information of the designated reference signal is different from the reference signal configuration information requested by the UE.

In an embodiment of the present disclosure, the acquiring the reference signal sent by the network device includes:
acquiring the designated reference signal configuration information corresponding to the designated reference signal and/or a designated reference signal mode corresponding to the designated reference signal sent by the network device, wherein the designated reference signal mode is a reference signal mode supported by the UE, and the designated reference signal configuration information is reference signal configuration information supported by the UE; and
acquiring the designated reference signal based on the designated reference signal configuration information.

In an embodiment of the present disclosure, the performing the corresponding operation based on the designated reference signal includes:
when a reference signal mode corresponding to the designated reference signal is the first reference signal mode, the corresponding operation includes: training, by the UE, the AI model based on the reference signal, and/or training, by the UE, the ML model based on the reference signal; and
when the reference signal mode corresponding to the designated reference signal is the second reference signal mode, the corresponding operation includes at least one of:
   training, by the UE, the AI model based on the reference signal;
   training, by the UE, the ML model based on the reference signal;
   performing, by the UE, the channel estimation based on the reference signal and the AI model;
   performing, by the UE, the channel estimation based on the reference signal and the ML model;
   evaluating, by the UE, the AI model based on the reference signal; or
   evaluating, by the UE, the ML model based on the reference signal.

A method for estimating a channel provided in another aspect of embodiments of the present disclosure is performed by a network device and is configured for downlink channel estimation. The method includes:
sending configuration information to a UE, wherein the configuration information includes a reference signal mode supported by a network device and/or reference signal configuration information of at least one reference signal corresponding to the reference signal mode supported by the network device;
acquiring a request message sent by the UE, wherein the request message is configured to request a reference signal mode and/or to request reference signal configuration information of at least one reference signal corresponding to the reference signal mode requested by the UE; and
sending a designated reference signal to the UE based on the request message.

In an embodiment of the present disclosure, the reference signal mode includes at least one of:
a first reference signal mode, wherein a reference signal corresponding to the first reference signal mode is configured to train an AI model and/or to train a Machine Learning (ML) model, and wherein the AI model is configured to implement the channel estimation based on the reference signal, and the ML model is also configured to implement the channel estimation based on the reference signal; or
a second reference signal mode, wherein a function of a reference signal corresponding to the second reference signal mode includes at least one of being configured to train the AI, being configured to train the ML model, being configured to evaluate the AI model, being configured to evaluate the ML model, being configured to perform the channel estimation based on the AI model, or being configured to perform the channel estimation based on the ML model.

In an embodiment of the present disclosure, the reference signal configuration information includes at least one of:
a reference signal pattern of the reference signal; or
a reference signal sequence of the reference signal.

In an embodiment of the present disclosure, the method further includes:
receiving capability information reported by the UE, wherein the capability information is configured to indicate whether a capability for the channel estimation based on AI and/or ML is supported by the UE; and
the capability information is configured to indicate at least one of:
   whether an AI-based channel estimation capability is supported by the UE;
   whether a ML-based channel estimation capability is supported by the UE;
   whether data transmission during training of the AI model is supported by the UE; or
   whether data transmission during training of the ML model is supported by the UE.

In an embodiment of the present disclosure, the sending the configuration information to the UE includes:
when the capability information indicates that a capability for the channel estimation based on AI and/or ML is supported by the UE, sending the configuration information to the UE.

In an embodiment of the present disclosure, the acquiring the request message sent by the UE includes:
acquiring the request message sent, through a signaling, by the UE.

In an embodiment of the present disclosure, the request message includes at least one of:
first indication information configured to indicate the reference signal mode requested by the UE;
second indication information configured to indicate the reference signal configuration information corresponding to the reference signal mode requested by the UE; or
a time domain position corresponding to reference signal configuration information requested by the UE.

In an embodiment of the present disclosure, the request message includes at least one of:
first indication information configured to indicate the reference signal mode requested by the UE;
second indication information configured to indicate the reference signal configuration information corresponding to the reference signal mode requested by the UE;
a configuration period for the configuration information by the network device recommended by the UE;
a first time domain position of reference signal configuration information corresponding to the first reference signal mode within the configuration period recommended by the UE; or
a second time domain position of reference signal configuration information corresponding to the second reference signal mode within the configuration period recommended by the UE.

In an embodiment of the present disclosure, the sending the designated reference signal to the UE based on the request message includes:
sending the designated reference signal to the UE based on the reference signal mode and/or the reference signal configuration information requested by the request message.

In an embodiment of the present disclosure, the sending the designated reference signal to the UE based on the request message includes:
determining a designated reference signal mode and/or at least one piece of designated reference signal configuration information corresponding to the designated reference signal mode, wherein the designated reference signal configuration information is different from reference signal configuration information requested by the UE, the designated reference signal mode is the same as or different from the reference signal mode requested by the UE, and the designated reference signal mode is a reference signal mode supported by the UE, and the designated reference signal configuration information is reference signal configuration information supported by the UE; and
sending the designated reference signal to the UE based on the designated reference signal mode and/or the designated reference signal configuration information.

In an embodiment of the present disclosure, the method further includes:
sending to the UE the designated reference signal mode and/or the designated reference signal configuration information corresponding to the designated reference signal.

An apparatus for estimating a channel provided in still another aspect of embodiments of the present disclosure includes:
a determination module, configured to determine configuration information, wherein the configuration information includes a reference signal mode supported by a network device and/or reference signal configuration information of at least one reference signal corresponding to the reference signal mode supported by the network device;
a sending module, configured to send a request message to the network device, wherein the request message is configured to request a reference signal mode and/or to request reference signal configuration information of at least one reference signal corresponding to the reference signal mode requested by the UE;
an acquisition module, configured to acquire a designated reference signal sent by the network device; and
a processing module, configured to perform a corresponding operation based on the designated reference signal to perform channel estimation.

An apparatus for estimating a channel provided in still another aspect of embodiments of the present disclosure includes:
a first sending module, configured to send configuration information to a UE, wherein the configuration information includes a reference signal mode supported by a network device and/or reference signal configuration information of at least one reference signal corresponding to the reference signal mode supported by the network device;
an acquisition module, configured to acquire a request message sent by the UE, wherein the request message is configured to request a reference signal mode and/or to request reference signal configuration information of at least one reference signal corresponding to the reference signal mode requested by the UE; and
a second sending module, configured to send a designated reference signal to the UE based on the request message.

A communication device provided in still another aspect of embodiments of the present disclosure includes a processor and a memory, wherein a computer program is stored in the memory, and the processor executes the computer program stored in the memory to cause the communication device to execute the method provided in the aspect of the above embodiments.

A communication device provided in still another aspect of embodiments of the present disclosure includes a processor and a memory, wherein a computer program is stored in the memory, and the processor executes the computer program stored in the memory to cause the communication device to execute the method provided in the other aspect of the above embodiments.
A communication device provided in still another aspect of embodiments of the present disclosure includes a processor and an interface circuit; and
wherein the interface circuit is configured to receive code instructions and transmit the code instructions to the processor; and
the processor is configured to run the code instructions to execute the method provided in the aspect of the above embodiments.

A communication device provided in still another aspect of embodiments of the present disclosure includes a processor and an interface circuit; and
wherein interface circuit is configured to receive code instructions and transmit the code instructions to the processor; and
the processor is configured to run the code instructions to execute the method provided in the other aspect of the above embodiments.

A computer-readable storage medium provided in still another aspect of embodiments of the present disclosure is configured to store instructions, wherein the instructions, when executed, cause the method provided in the aspect of the above embodiments.

A computer-readable storage medium provided in still another aspect of embodiments of the present disclosure is configured to store instructions, wherein the instructions, when executed, cause the method provided in the other aspect of the above embodiments.

To sum up, in the method/apparatus/device for estimating the channel and the storage medium provided in the embodiments of the present disclosure, the UE will first determine the configuration information, which includes the reference signal mode supported by the network device, and/or the reference signal configuration information of the at least one reference signal corresponding to the reference signal mode supported by the network device; the UE will send the request message to the network device, and the request message is configured to request the reference signal mode, and/or to request the reference signal configuration information of the at least one reference signal corresponding to the reference signal mode requested by the UE; and thereafter, the UE will acquire the designated reference signal sent by the network device, and will perform the corresponding operation based on the designated reference signal to perform the channel estimation. Therefore, the embodiments of the present disclosure provide the method for estimating the channel based on AI and/or ML, which can improve the channel estimation performance and ensure the accuracy and precision of the channel estimation.

### BRIEF DESCRIPTION OF THE DRAWINGS

The above and/or additional aspects and advantages of the present disclosure will become apparent and readily understood from the following description of embodiments with reference to the accompanying drawings, in which:
FIG. 1 is a schematic flowchart of a method for estimating a channel provided by an embodiment of the present disclosure;
FIG. 2a is a schematic flowchart of a method for estimating a channel provided by another embodiment of the present disclosure;
FIG. 2b is a schematic flowchart of a method for estimating a channel provided by yet another embodiment of the present disclosure;
FIG. 3 is a schematic flowchart of a method for estimating a channel provided by still another embodiment of the present disclosure;
FIG. 4 is a schematic flowchart of a method for estimating a channel provided by still another embodiment of the present disclosure;
FIG. 5 is a schematic flowchart of a method for estimating a channel provided by still another embodiment of the present disclosure;
FIG. 6a is a schematic flowchart of a method for estimating a channel provided by still another embodiment of the present disclosure;
FIG. 6b is a schematic flowchart of a method for estimating a channel provided by still another embodiment of the present disclosure;
FIG. 7 is a schematic flowchart of a method for estimating a channel provided by still another embodiment of the present disclosure;
FIG. 8 is a schematic flowchart of a method for estimating a channel provided by still another embodiment of the present disclosure;
FIG. 9 is a schematic structural diagram of an apparatus for estimating a channel provided by an embodiment of the present disclosure;
FIG. 10 is a schematic structural diagram of an apparatus for estimating a channel provided by another embodiment of the present disclosure;
FIG. 11 is a block diagram of a user equipment provided by an embodiment of the present disclosure; and
FIG. 12 is a block diagram of a network side device provided by an embodiment of the present disclosure.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of the embodiments do not represent all implementations consistent with the embodiments of the present disclosure. Instead, they are merely examples of apparatuses and methods consistent with some aspects of embodiments of the present disclosure as recited in the appended claims.

The terms used in embodiments of the present disclosure are merely for the purpose of describing particular embodiments and are not intended to limit embodiments of the present disclosure. As used in embodiments of the present disclosure and the appended claims, the singular forms "a" and "the" are intended to include the plural forms as well, unless the context clearly indicates otherwise. It should also be understood that the term "and/or" as used herein refers to and includes any or all possible combinations of one or more of the associated listed items.

It should be understood that, although the terms first, second, third, etc. may be used in embodiments of the present disclosure to describe various information, such information should not be limited to these terms. These terms are only used to distinguish the same type of information from each other. For example, without departing from the scope of embodiments of the present disclosure, the first indication information may also be referred to as the second information, and similarly, the second information may also be referred to as the first information. Depending on the context, the word "if" as used herein can be interpreted as "upon" or "when" or "in response to determination".

A method/apparatus/device for estimating a channel and a storage medium provided by embodiments of the present disclosure are described in detail below with reference to the accompanying drawings.

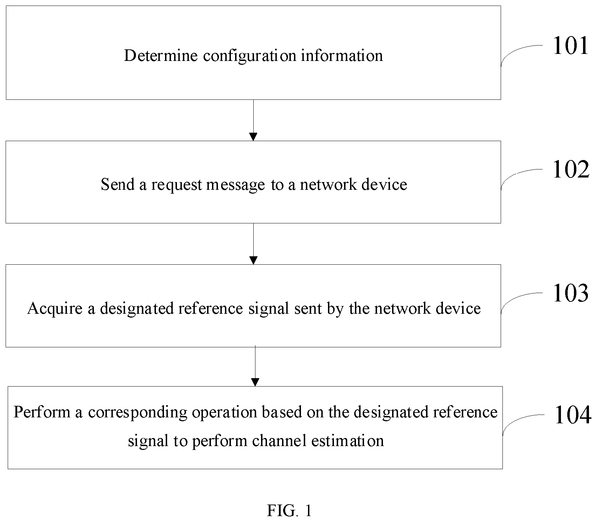

FIG. 1 is a schematic flowchart of a method for estimating a channel provided by an embodiment of the present disclosure. The method is performed by a User Equipment (UE), and may be configured for downlink channel estimation. As shown in FIG. 1, the method may include steps 101 to 104.

In the step 101, configuration information is determined.

It should be noted that in an embodiment of the present disclosure, the UE may refer to a device that provides speech and/or data connectivity for a user. The UE may communicate with one or more core networks via a Radio Access Network (RAN). The UE may be an Internet of Things terminal, such as a sensor device, a mobile phone (or a "cellular" phone), and a computer having the Internet of Things terminal, for example, a fixed, portable, pocket-sized, handheld, computer built-in or vehicle-mounted device. For example, it may be a station (STA), a subscriber unit, a subscriber station, a mobile station, a mobile, a remote station, an access point, a remote terminal, an access terminal, a user terminal, or a user agent. Alternatively, the UE may also be a device of an unmanned aerial vehicle. Alternatively, the UE may also be an in-vehicle device, for example, a trip computer with a wireless communication function, or a wireless terminal external to the trip computer. Alternatively, the UE may also be a roadside device, for example, a street light, a signal light, or other roadside device with a wireless communication function, etc.

In an embodiment of the present disclosure, the configuration information may specifically include at least one of:
a reference signal mode supported by a network device; or
reference signal configuration information of at least one reference signal corresponding to the reference signal mode supported by the network device.

In an embodiment of the present disclosure, the reference signal mode may include at least one of:
a first reference signal mode, where a reference signal corresponding to the first reference signal mode is configured to train an AI model and/or to train a ML model, and in an embodiment of the present disclosure, the AI model may be configured to implement channel estimation based on the reference signal, and the ML model may be configured to implement the channel estimation based on the reference signal; or
a second reference signal mode, where a function of a reference signal corresponding to the second reference signal mode may include at least one of being configured to train the AI model, being configured to train the ML model, being configured to evaluate the AI model, being configured to evaluate the ML model, being configured to perform the channel estimation based on the AI model, or being configured to perform the channel estimation based on the ML model.

In an embodiment of the present disclosure, the reference signal configuration information of the reference signal may include at least one of:
a reference signal pattern of the reference signal; or
a reference signal sequence of the reference signal.

In an embodiment of the present disclosure, the method for determining the configuration information may include at least one of:
determining the configuration information based on a protocol agreement; or
acquiring the configuration information sent by the network device.

In the step 102, a request message is sent to the network device.

In an embodiment of the present disclosure, the request message may be configured to request the reference signal mode, and/or to request the reference signal configuration information of the at least one reference signal corresponding to the reference signal mode requested by the UE.

In an embodiment of the present disclosure, the UE may specifically send the request message to the network device through a signaling. Specifically, in an embodiment of the present disclosure, the UE may send the request message to the network device through a dynamic signaling. In another embodiment of the present disclosure, the UE may also send the request message to the network device through a semi-static signaling.

It should be noted that, in an embodiment of the present disclosure, the request message sent by the UE to the network device through the signaling may be configured for: the UE notifying the network device of the reference signal mode and/or the reference signal configuration information to be specifically requested by the UE. Based on this, in an embodiment of the present disclosure, the request message sent by the UE to the network device through the signaling may include at least one of:
first indication information configured to indicate the reference signal mode requested by the UE;
second indication information configured to indicate the reference signal configuration information corresponding to the reference signal mode requested by the UE; or
a time domain position corresponding to the reference signal configuration information requested by the UE.

It should be noted that, in an embodiment of the present disclosure, the first indication information may be, for example, a mode number of the reference signal mode. For example, when the reference signal mode requested by the UE is the first reference signal mode, the first indication information may be an indication code "1". In addition, in an embodiment of the present disclosure, an indication code may be pre-assigned to each piece of reference signal configuration information of each reference signal mode, and the second indication information may be an indication code of the reference signal configuration information requested by the UE.

Further, in an embodiment of the present disclosure, the reference signal mode requested by the UE in the request message may be specifically selected by the UE from the reference signal modes supported by the network device in the configuration information. In an embodiment of the present disclosure, a criterion for the UE to specifically select which reference signal mode to request may be: selecting to request the corresponding reference signal mode based on a current need of the UE.

Specifically, in an embodiment of the present disclosure, when the current need of the UE is a need to train the AI model and/or a need to train the ML model, the UE may request the first reference signal mode and the second reference signal mode from the network device. The need to train the AI model and/or the need to train the ML model may be understood as a need to train a newly established AI model and/or ML model, or a need to retrain the trained AI model and/or the trained ML model. For example, when the UE moves too fast, the current AI model and/or ML model cannot meet the current channel estimation accuracy. In this case, the current AI model and/or ML model needs to be retrained.

Furthermore, in another embodiment of the present disclosure, when the current need of the UE is any one of a need to evaluate the AI model, a need to evaluate the ML model, a need to perform the channel estimation based on the AI model, and a need to perform the channel estimation based on the ML model, the UE may request the second reference signal mode from the network device.

In an embodiment of the present disclosure, each reference signal mode may correspond to at least one reference signal, and each reference signal corresponds to one piece of reference signal configuration information. After determining the reference signal mode requested from the network device, the UE may further determine at least one piece of reference signal configuration information to be requested from all types of reference signal configuration information corresponding to this reference signal mode. In an embodiment of the present disclosure, the UE may specifically determine which reference signal configuration information of the reference signal mode to be requested based on information such as a moving speed of the UE. Specifically, in an embodiment of the present disclosure, when the moving speed of the UE is relatively large, the UE may request the network device for reference signal configuration information of the more dense reference signal among all reference signals corresponding to the reference signal mode. When the moving speed of the UE is relatively small, the UE may request the network device for reference signal configuration information of the more sparse reference signal among all reference signals corresponding to the reference signal mode.

In an embodiment of the present disclosure, the time domain position corresponding to the reference signal configuration information requested by the UE may specifically be: a time domain position when the reference signal configuration information requested by the UE is transmitted.

Further, in another embodiment of the present disclosure, the request message sent by the UE to the network device through the signaling may be configured for: the UE requesting the network device for a transmission time of reference signal configuration information of each reference signal mode. Based on this, in an embodiment of the present disclosure, the request message sent by the UE to the network device through the signaling may include at least one of:
first indication information configured to indicate the reference signal mode requested by the UE;
second indication information configured to indicate the reference signal configuration information corresponding to the reference signal mode requested by the UE;
a configuration period for the configuration information by the network device recommended by the UE;
a first time domain position of reference signal configuration information corresponding to the first reference signal mode within the configuration period recommended by the UE; or
a second time domain position of reference signal configuration information corresponding to the second reference signal mode within the configuration period recommended by the UE.

In an embodiment of the present disclosure, the first time domain position may be a time domain position for transmitting the reference signal configuration information of the first reference signal mode requested by the UE within the configuration period recommended by the UE. For example, the first time domain position may be a time slot in the first half of the configuration period. The second time domain position may be a time domain position for transmitting the reference signal configuration information of the second reference signal mode requested by the UE within the configuration period recommended by the UE. For example, the second time domain position may be a time slot in the second half of the configuration period.

In the step 103, a designated reference signal sent by the network device is acquired.

In an embodiment of the present disclosure, the designated reference signal may be sent by the network device based on the request message sent by the UE.

It should be noted that, in an embodiment of the present disclosure, the designated reference signal may be sent by the network device directly based on the reference signal mode and/or the reference signal configuration information requested by the request message. That is, the network device directly determines, as the designated reference signal, a reference signal corresponding to the reference signal mode and/or the reference signal configuration information requested by the UE.

Specifically, in an embodiment of the present disclosure, when the request message in the step 102 includes the first indication information configured to indicate that the reference signal mode requested by the UE is the first reference signal mode, the second indication information configured to indicate first reference signal configuration information corresponding to the first reference signal mode requested by the UE, and the time domain position corresponding to the reference signal configuration information requested by the UE, it means that what is requested by the UE from the network device is the first reference signal mode and the first reference signal configuration information of the first reference signal mode (that is, it means that the UE requests the first reference signal of the first reference mode from the network device), and it is expected that the network device can send the first reference signal to the UE based on the first reference signal configuration information at the time domain position requested by the UE. In this case, the network device can directly determine the first reference signal as the designated reference signal based on the request message, and send to the UE, at the time domain position requested by the UE, the first reference signal of the first reference signal mode based on the first reference signal configuration information.

Alternatively, in an embodiment of the present disclosure, when the request message in the step 102 includes the first indication information configured to indicate that the reference signal mode requested by the UE is the first reference signal mode, the second indication information configured to indicate the first reference signal configuration information corresponding to the first reference signal mode requested by the UE, the configuration period for the configuration information by the network device recommended by the UE, the first time domain position of the reference signal configuration information corresponding to the first reference signal mode within the configuration period recommended by the UE, and the second time domain position of the reference signal configuration information corresponding to the second reference signal mode within the configuration period recommended by the UE, it means that the UE requests the first reference signal of the first reference mode from the network device, and the network device can directly determine, based on the request message, the first reference signal corresponding to the first reference signal mode as the designated reference signal, periodically send to the UE the first reference signal corresponding to the first reference signal mode in the configuration period recommended by the UE, and each time sending to the UE the first reference signal corresponding to the first reference signal mode, send to the UE, at the first time domain position in the configuration period recommended by the UE, the first reference signal corresponding to the first reference signal mode based on the first reference signal configuration information corresponding to the first reference signal mode.

In another embodiment of the present disclosure, the reference signal may be a designated reference signal re-determined by the network device, and the designated reference signal is different from the reference signal requested by the UE, which is specifically in that: designated reference signal configuration information of the re-determined designated reference signal is different from the reference signal configuration information requested by the UE, and a designated reference signal mode of the re-determined designated reference signal is the same as or different from the reference signal mode requested by the UE. In addition, it should also be ensured that the designated reference signal configuration information and the designated reference signal mode are both supported by the UE.

Specifically, in an embodiment of the present disclosure, when the request message in the step 102 includes the first indication information configured to indicate that the reference signal mode requested by the UE is the first reference signal mode, the second indication information configured to indicate first reference signal configuration information corresponding to the first reference signal mode requested by the UE, and the time domain position corresponding to the reference signal configuration information requested by the UE, it means that what is requested by the UE from the network device is the first reference signal mode and the first reference signal configuration information of the first reference signal mode (that is, it means that the UE requests the first reference signal of the first reference mode from the network device), and it is expected that the network device can send to the UE, at the time domain position requested by the UE, the first reference signal of the first reference signal mode based on the first reference signal configuration information. In this case, assuming that the network device determines that the more dense reference signal should be transmitted currently based on the current channel quality, then the network device can determine the more dense second reference signal of the first reference signal mode as the designated reference signal, and then the network device can send to the UE, at the time domain position requested by the UE, the designated reference signal based on second reference signal configuration information of the first reference signal mode.

Alternatively, in an embodiment of the present disclosure, when the request message in the step 102 includes the first indication information configured to indicate that the reference signal mode requested by the UE is the first reference signal mode, the second indication information configured to indicate the first reference signal configuration information corresponding to the first reference signal mode requested by the UE, the configuration period for the configuration information by the network device recommended by the UE, the first time domain position of the reference signal configuration information corresponding to the first reference signal mode within the configuration period recommended by the UE, and the second time domain position of the reference signal configuration information corresponding to the second reference signal mode within the configuration period recommended by the UE, it means that the UE requests the first reference signal of the first reference mode from the network device. In this case, assuming that the network device determines that the more dense reference signal should be transmitted currently based on the current channel quality, the network device can determine the more dense second reference signal of the first reference signal mode as the designated reference signal, and then the network device can send to the UE, at the first time domain position requested by the UE, the designated reference signal based on second reference signal configuration information of the first reference signal mode.

In addition, it should be noted that, in an embodiment of the present disclosure, when the designated reference signal sent by the network device is different from the reference signal requested by the UE, the method for the UE to acquire the designated reference signal sent by the network device in the above step 103 may include: the UE acquires the designated reference signal mode and/or the designated reference signal configuration information of the designated reference signal sent by the network device, and acquires, based on the designated reference signal mode and/or the designated reference signal configuration information, the designated reference signal sent by the network device.

In another embodiment of the present disclosure, when the designated reference signal sent by the network device is the same as the reference signal requested by the UE, the method for the UE to acquire the designated reference signal sent by the network device in the above step 103 may include: the UE further acquires the designated reference signal mode and/or the designated reference signal configuration information of the designated reference signal sent by the network device, and the designated reference signal mode is the reference signal mode requested by the UE, the designated reference signal configuration information, and the UE can acquire, based on the designated reference signal configuration information or the reference signal configuration information requested by the UE, the designated reference signal sent by the network device.

In another embodiment of the present disclosure, when the designated reference signal sent by the network device is the same as the reference signal requested by the UE, the method for the UE to acquire the designated reference signal sent by the network device in the above step 103 may include: if the UE fails to acquire, within a predetermined time period, the designated reference signal mode and/or the designated reference signal configuration information of the designated reference signal sent by the network device (that is, the network device does not send the designated reference signal mode and/or the designated reference signal configuration information of the designated reference signal), the UE directly acquires the designated reference signal based on the reference signal configuration information requested by the UE. The predetermined time period may be predetermined.

In the step 104, a corresponding operation is performed based on the designated reference signal to perform channel estimation.

Specifically, in an embodiment of the present disclosure, performing the corresponding operation based on the designated reference signal may include:
in step a, a reference signal mode corresponding to the designated reference signal is determined.

In an embodiment of the present disclosure, the method for determining the reference signal mode corresponding to the designated reference signal may specifically be: the UE may determine it directly based on the designated reference signal mode of the designated reference signal sent by the network device, and if the network device does not send the designated reference signal mode, the UE may determine the reference signal mode requested by the UE in the above step 102 as the reference signal mode corresponding to the designated reference signal.

In step b, when the reference signal mode corresponding to the designated reference signal is the first reference signal mode, the corresponding operation performed by the UE may include at least one of the following:
the UE trains the AI model based on the reference signal, so that the channel estimation is subsequently performed based on the trained AI model; or
the UE trains the ML model based on the reference signal, so that the channel estimation is subsequently performed based on the trained ML model.

In step c, when the reference signal mode corresponding to the designated reference signal is the second reference signal mode, the corresponding operation performed by the UE may include at least one of the following:
the UE trains the AI model based on the reference signal, so that the channel estimation is subsequently performed based on the trained AI model;
the UE trains the ML model based on the reference signal, so that the channel estimation is subsequently performed based on the trained ML model;
the UE performs the channel estimation based on the reference signal and the AI model;
the UE performs the channel estimation based on the reference signal and the ML model;
the UE evaluates the AI model based on the reference signal (for example, the UE may evaluate the accuracy of the AI model) to ensure the accuracy of the AI model, thereby ensuring the accuracy of the subsequent channel estimation based on the AI model; or
the UE evaluates the ML model based on the reference signal (for example, the UE may evaluate the accuracy of the ML model) to ensure the accuracy of the ML model, thereby ensuring the accuracy of the subsequent channel estimation based on the ML model.

In an embodiment of the present disclosure, the performing, by the UE, the channel estimation based on the reference signal and the AI model may specifically include: inputting relevant information of the reference signal into the trained AI model, so that the AI model can output a channel estimation result. The method for the UE to perform the channel estimation based on the reference signal and the ML model is similar, which will not be repeated in embodiments of the present disclosure.

In summary, in the method for estimating the channel provided in the embodiments of the present disclosure, the UE will first determine the configuration information, which includes the reference signal mode supported by the network device, and/or the reference signal configuration information of the at least one reference signal corresponding to the reference signal mode supported by the network device; the UE will send the request message to the network device, and the request message is configured to request the reference signal mode, and/or to request the reference signal configuration information of the at least one reference signal corresponding to the reference signal mode requested by the UE; and thereafter, the UE will acquire the designated reference signal sent by the network device, and will perform the corresponding operation based on the designated reference signal to perform the channel estimation. Therefore, the embodiments of the present disclosure provide the method for estimating the channel based on AI and/or ML, which can improve the channel estimation performance and ensure the accuracy and precision of the channel estimation.

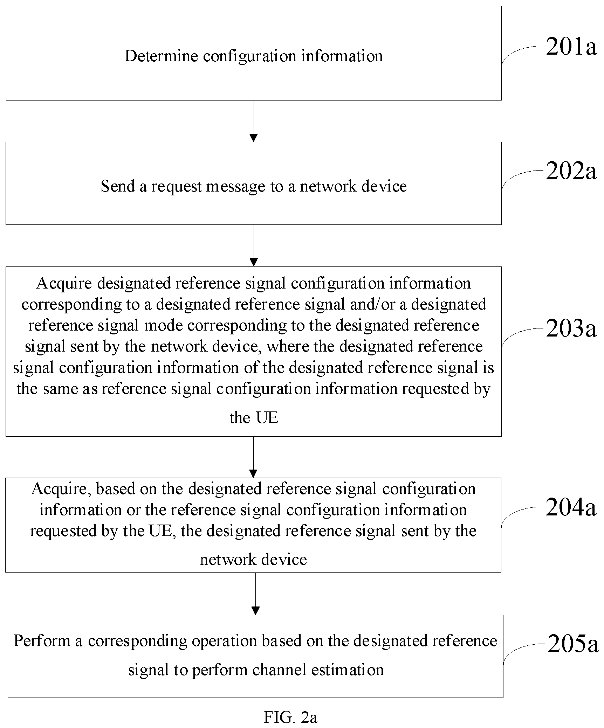

FIG. 2a is a schematic flowchart of a method for estimating a channel provided by an embodiment of the present disclosure. The method is performed by a UE and may be configured for downlink channel estimation. As shown in FIG. 2a, the method may include steps 201a to 205a.

In the step 201a, configuration information is determined.

In the step 202a, a request message is sent to a network device.

In the step 203a, designated reference signal configuration information corresponding to a designated reference signal and/or a designated reference signal mode corresponding to the designated reference signal sent by the network device are acquired, and the designated reference signal configuration information of the designated reference signal is the same as reference signal configuration information requested by the UE.

In the step 204a, the designated reference signal sent by the network device is acquired based on the designated reference signal configuration information or the reference signal configuration information requested by the UE.

In the step 205a, a corresponding operation is performed based on the designated reference signal to perform channel estimation.

Regarding the detailed description of the steps 201a-205a, reference may be made to the description of the above embodiments, which will not be repeated here in embodiments of the present disclosure.

In summary, in the method for estimating the channel provided in the embodiments of the present disclosure, the UE will first determine the configuration information, which includes the reference signal mode supported by the network device, and/or the reference signal configuration information of the at least one reference signal corresponding to the reference signal mode supported by the network device; the UE will send the request message to the network device, and the request message is configured to request the reference signal mode, and/or to request the reference signal configuration information of the at least one reference signal corresponding to the reference signal mode requested by the UE; and thereafter, the UE will acquire the designated reference signal sent by the network device, and will perform the corresponding operation based on the designated reference signal to perform the channel estimation. Therefore, the embodiments of the present disclosure provide the method for estimating the channel based on AI and/or ML, which can improve the channel estimation performance and ensure the accuracy and precision of the channel estimation.

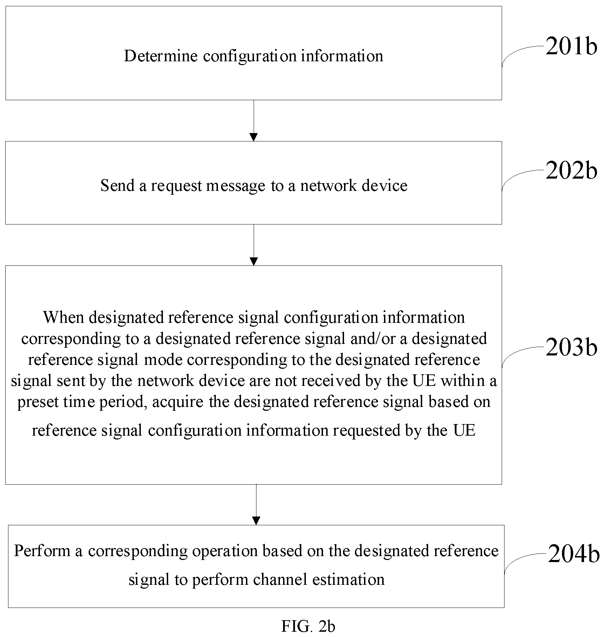

FIG. 2b is a schematic flowchart of a method for estimating a channel provided by an embodiment of the present disclosure. The method is performed by a UE and may be configured for downlink channel estimation. As shown in FIG. 2a, the method may include steps 201b to 204b.

In the step 201b, configuration information is determined.

In the step 202b, a request message is sent to a network device.

In the step 203b, when the UE does not receive, within a preset time period, designated reference signal configuration information corresponding to the designated reference signal and/or a designated reference signal mode corresponding to the designated reference signal sent by the network device, a designated reference signal is acquired based on reference signal configuration information requested by the UE, and the designated reference signal configuration information of the designated reference signal is the same as the reference signal configuration information requested by the UE.

In the step 204b, a corresponding operation is performed based on the designated reference signal to perform channel estimation.

Regarding the detailed description of the steps 201a-204a, reference may be made to the description of the above embodiments, which will not be repeated here in embodiments of the present disclosure.

In summary, in the method for estimating the channel provided in the embodiments of the present disclosure, the UE will first determine the configuration information, which includes the reference signal mode supported by the network device, and/or the reference signal configuration information of the at least one reference signal corresponding to the reference signal mode supported by the network device; the UE will send the request message to the network device, and the request message is configured to request the reference signal mode, and/or to request the reference signal configuration information of the at least one reference signal corresponding to the reference signal mode requested by the UE; and thereafter, the UE will acquire the designated reference signal sent by the network device, and will perform the corresponding operation based on the designated reference signal to perform the channel estimation. Therefore, the embodiments of the present disclosure provide the method for estimating the channel based on AI and/or ML, which can improve the channel estimation performance and ensure the accuracy and precision of the channel estimation.

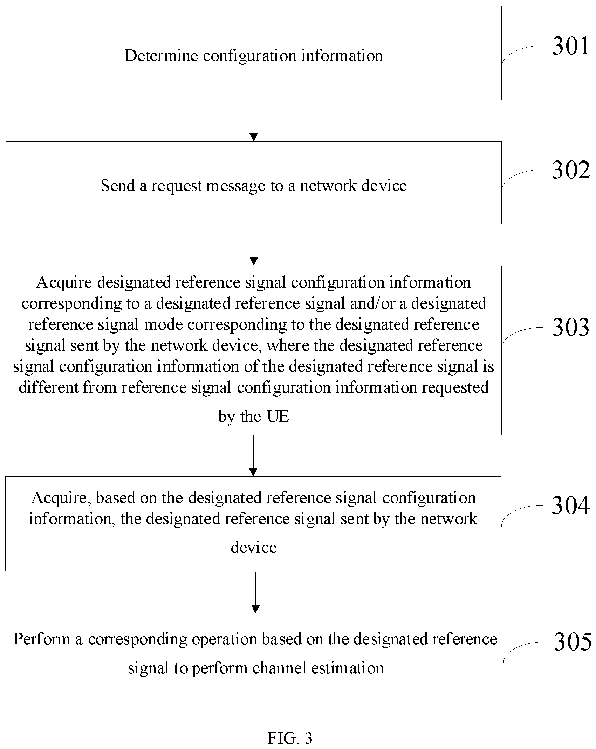

FIG. 3 is a schematic flowchart of a method for estimating a channel provided by an embodiment of the present disclosure. The method is performed by a UE and may be configured for downlink channel estimation. As shown in FIG. 3, the method may include steps 301 to 305.

In the step 301, configuration information is determined.

In the step 302, a request message is sent to a network device.

In the step 303, designated reference signal configuration information corresponding to a designated reference signal and/or a designated reference signal mode corresponding to the designated reference signal sent by the network device are acquired, and the designated reference signal configuration information of the designated reference signal is different from reference signal configuration information requested by the UE.

In the step 304, the designated reference signal sent by the network device is acquired based on the designated reference signal configuration information.

In the step 305, a corresponding operation is performed based on the reference signal to perform channel estimation.

Regarding the detailed description of the steps 301-305, reference may be made to the description of the above embodiments, which will not be repeated here in embodiments of the present disclosure.

In summary, in the method for estimating the channel provided in the embodiments of the present disclosure, the UE will first determine the configuration information, which includes the reference signal mode supported by the network device, and/or the reference signal configuration information of the at least one reference signal corresponding to the reference signal mode supported by the network device; the UE will send the request message to the network device, and the request message is configured to request the reference signal mode, and/or to request the reference signal configuration information of the at least one reference signal corresponding to the reference signal mode requested by the UE; and thereafter, the UE will acquire the designated reference signal sent by the network device, and will perform the corresponding operation based on the designated reference signal to perform the channel estimation. Therefore, the embodiments of the present disclosure provide the method for estimating the channel based on AI and/or ML, which can improve the channel estimation performance and ensure the accuracy and precision of the channel estimation.

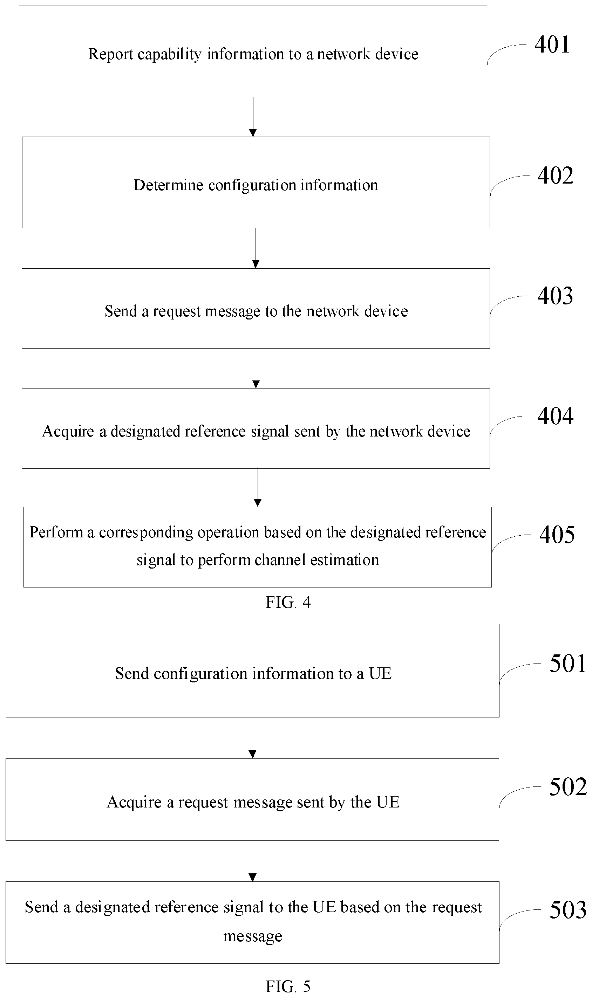

FIG. 4 is a schematic flowchart of a method for estimating a channel provided by an embodiment of the present disclosure. The method is performed by a UE and may be configured for downlink channel estimation. As shown in FIG. 4, the method may include steps 401 to 405.

In the step 401, capability information is reported to a network device.

In an embodiment of the present disclosure, the capability information may be configured to indicate whether the UE supports a capability for the channel estimation based on AI and/or ML.

The capability information is configured to indicate at least one of:
whether the UE supports an AI-based channel estimation capability;
whether the UE supports a ML-based channel estimation capability;
whether the UE supports data transmission during training of the AI model; or
whether the UE supports data transmission during training of the ML model.

In the step 402, configuration information is determined.

Regarding the relevant introduction about the configuration information, reference may be made to the description of the above embodiments, which will not be repeated here in embodiments of the present disclosure.

It should be noted that, in an embodiment of the present disclosure, when the capability information indicates that the UE supports the capability for the channel estimation based on AI and/or ML (for example, indicating that the UE supports the AI-based channel estimation capability, and/or indicating that the UE supports the ML-based channel estimation capability), the UE may perform the step 402 to determine the configuration information. Otherwise, the UE does not perform the step 402 and subsequent processes.

In the step 403, a request message is sent to a network device.

In the step 404, a designated reference signal sent by the network device is acquired.

In the step 405, a corresponding operation is performed based on the designated reference signal to perform channel estimation.

Regarding the detailed description of the steps 402-405, reference may be made to the description of the above embodiments, which will not be repeated here in embodiments of the present disclosure.

In summary, in the method for estimating the channel provided in the embodiments of the present disclosure, the UE will first determine the configuration information, which includes the reference signal mode supported by the network device, and/or the reference signal configuration information of the at least one reference signal corresponding to the reference signal mode supported by the network device; the UE will send the request message to the network device, and the request message is configured to request the reference signal mode, and/or to request the reference signal configuration information of the at least one reference signal corresponding to the reference signal mode requested by the UE; and thereafter, the UE will acquire the designated reference signal sent by the network device, and will perform the corresponding operation based on the designated reference signal to perform the channel estimation. Therefore, the embodiments of the present disclosure provide the method for estimating the channel based on AI and/or ML, which can improve the channel estimation performance and ensure the accuracy and precision of the channel estimation.

FIG. 5 is a schematic flowchart of a method for estimating a channel provided by an embodiment of the present disclosure. The method is performed by a network device and may be configured for downlink channel estimation. As shown in FIG. 5, the method may include steps 501 to 503.

In the step 501, configuration information is sent to a UE.

In an embodiment of the present disclosure, the configuration information may include a reference signal mode supported by the network device, and/or reference signal configuration information of at least one reference signal corresponding to the reference signal mode supported by the network device.

In the step 502, a request message sent by the UE is acquired.

In an embodiment of the present disclosure, the request message is configured to request a reference signal mode, and/or to request reference signal configuration information of at least one reference signal corresponding to the reference signal mode requested by the UE.

Regarding the detailed description of the steps 501-502, reference may be made to the description of the above embodiments, which will not be repeated here in embodiments of the present disclosure.

In the step 503, a designated reference signal is sent to the UE based on the request message.

It should be noted that, in an embodiment of the present disclosure, the designated reference signal may be sent by the network device directly based on the reference signal mode and/or the reference signal configuration information requested by the request message. That is, the network device directly determines, as the designated reference signal, a reference signal corresponding to the reference signal mode and/or the reference signal configuration information requested by the UE.

Specifically, in an embodiment of the present disclosure, when the request message in the step 102 includes the first indication information configured to indicate that the reference signal mode requested by the UE is the first reference signal mode, the second indication information configured to indicate first reference signal configuration information corresponding to the first reference signal mode requested by the UE, and the time domain position corresponding to the reference signal configuration information requested by the UE, it means that what is requested by the UE from the network device is the first reference signal mode and the first reference signal configuration information of the first reference signal mode (that is, it means that the UE requests the first reference signal of the first reference mode from the network device), and it is expected that the network device can send the first reference signal to the UE based on the first reference signal configuration information at the time domain position requested by the UE. In this case, the network device can directly determine the first reference signal as the designated reference signal based on the request message, and send to the UE, at the time domain position requested by the UE, the first reference signal of the first reference signal mode based on the first reference signal configuration information.

Alternatively, in an embodiment of the present disclosure, when the request message in the step 102 includes the first indication information configured to indicate that the reference signal mode requested by the UE is the first reference signal mode, the second indication information configured to indicate the first reference signal configuration information corresponding to the first reference signal mode requested by the UE, the configuration period for the configuration information by the network device recommended by the UE, the first time domain position of the reference signal configuration information corresponding to the first reference signal mode within the configuration period recommended by the UE, and the second time domain position of the reference signal configuration information corresponding to the second reference signal mode within the configuration period recommended by the UE, it means that the UE requests the first reference signal of the first reference mode from the network device, and the network device can directly determine, based on the request message, the first reference signal corresponding to the first reference signal mode as the designated reference signal, periodically send to the UE the first reference signal corresponding to the first reference signal mode in the configuration period recommended by the UE, and each time sending to the UE the first reference signal corresponding to the first reference signal mode, send to the UE, at the first time domain position in the configuration period recommended by the UE, the first reference signal corresponding to the first reference signal mode based on the first reference signal configuration information corresponding to the first reference signal mode.

In another embodiment of the present disclosure, the reference signal may be a designated reference signal re-determined by the network device, and the designated reference signal is different from the reference signal requested by the UE, which is specifically in that: designated reference signal configuration information of the re-determined designated reference signal is different from the reference signal configuration information requested by the UE, and a designated reference signal mode of the re-determined designated reference signal is the same as or different from the reference signal mode requested by the UE. In addition, it should also be ensured that the designated reference signal configuration information and the designated reference signal mode are both supported by the UE.

Specifically, in an embodiment of the present disclosure, when the request message in the step 102 includes the first indication information configured to indicate that the reference signal mode requested by the UE is the first reference signal mode, the second indication information configured to indicate first reference signal configuration information corresponding to the first reference signal mode requested by the UE, and the time domain position corresponding to the reference signal configuration information requested by the UE, it means that what is requested by the UE from the network device is the first reference signal mode and the first reference signal configuration information of the first reference signal mode (that is, it means that the UE requests the first reference signal of the first reference mode from the network device), and it is expected that the network device can send to the UE, at the time domain position requested by the UE, the first reference signal of the first reference signal mode based on the first reference signal configuration information. In this case, assuming that the network device determines that the more dense reference signal should be transmitted currently based on the current channel quality, then the network device can determine the more dense second reference signal of the first reference signal mode as the designated reference signal, and then the network device can send to the UE, at the time domain position requested by the UE, the designated reference signal based on second reference signal configuration information of the first reference signal mode.

Alternatively, in an embodiment of the present disclosure, when the request message in the step 102 includes the first indication information configured to indicate that the reference signal mode requested by the UE is the first reference signal mode, the second indication information configured to indicate the first reference signal configuration information corresponding to the first reference signal mode requested by the UE, the configuration period for the configuration information by the network device recommended by the UE, the first time domain position of the reference signal configuration information corresponding to the first reference signal mode within the configuration period recommended by the UE, and the second time domain position of the reference signal configuration information corresponding to the second reference signal mode within the configuration period recommended by the UE, it means that the UE requests the first reference signal of the first reference mode from the network device. In this case, assuming that the network device determines that the more dense reference signal should be transmitted currently based on the current channel quality, the network device can determine the more dense second reference signal of the first reference signal mode as the designated reference signal, and then the network device can send to the UE, at the first time domain position requested by the UE, the designated reference signal based on second reference signal configuration information of the first reference signal mode.

In addition, it should be noted that, in an embodiment of the present disclosure, when the designated reference signal sent by the network device is different from the reference signal requested by the UE, the network device also needs to first send to the UE the designated reference signal mode and/or the designated reference signal configuration information of the designated reference signal, so that the UE can acquire, based on the designated reference signal mode and/or the designated reference signal configuration information, the designated reference signal sent by the network device.

In another embodiment of the present disclosure, when the designated reference signal sent by the network device is the same as the reference signal requested by the UE, the network device may also send to the UE the designated reference signal mode and/or the designated reference signal configuration information of the designated reference signal. The designated reference signal mode is the reference signal mode requested by the UE, the designated reference signal configuration information, and the UE may acquire, based on the designated reference signal mode and/or the designated reference signal configuration information, the designated reference signal sent by the network device.

In yet another embodiment of the present disclosure, when the designated reference signal sent by the network device is the same as the reference signal requested by the UE, the network device may not need to send to the UE the designated reference signal mode and/or the designated reference signal configuration information of the designated reference signal, and the UE may directly acquire the designated reference signal based on the reference signal configuration information requested by the UE.

In summary, in the method for estimating the channel provided in the embodiments of the present disclosure, the UE will first determine the configuration information, which includes the reference signal mode supported by the network device, and/or the reference signal configuration information of the at least one reference signal corresponding to the reference signal mode supported by the network device; the UE will send the request message to the network device, and the request message is configured to request the reference signal mode, and/or to request the reference signal configuration information of the at least one reference signal corresponding to the reference signal mode requested by the UE; and thereafter, the UE will acquire the designated reference signal sent by the network device, and will perform the corresponding operation based on the designated reference signal to perform the channel estimation. Therefore, the embodiments of the present disclosure provide the method for estimating the channel based on AI and/or ML, which can improve the channel estimation performance and ensure the accuracy and precision of the channel estimation.

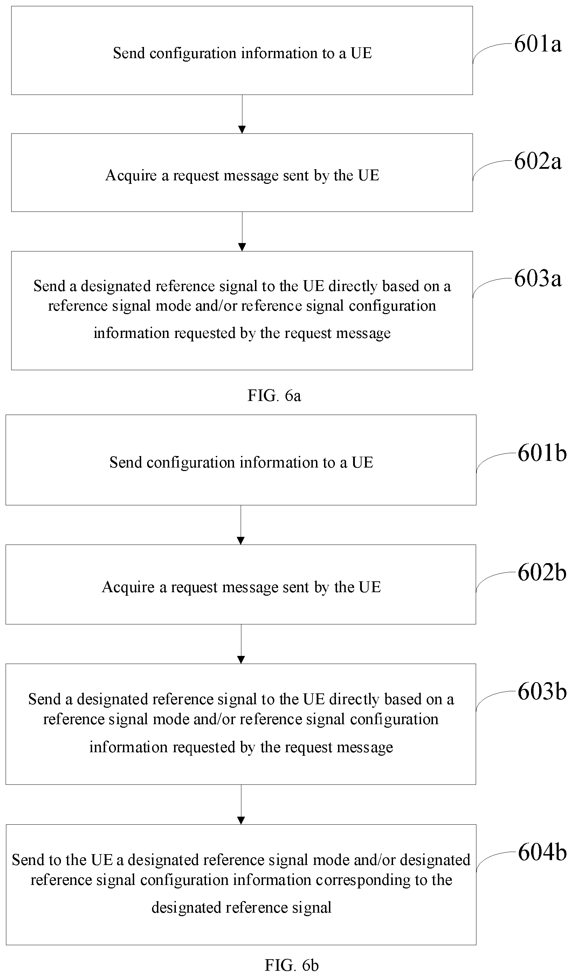

FIG. 6a is a schematic flowchart of a method for estimating a channel provided by an embodiment of the present disclosure. The method is performed by a network device and may be configured for downlink channel estimation. As shown in FIG. 6a, the method may include steps 601a to 603a.

In the step 601a, configuration information is sent to a UE.

In an embodiment of the present disclosure, the configuration information may include a reference signal mode supported by the network device, and/or reference signal configuration information of at least one reference signal corresponding to the reference signal mode supported by the network device.

In the step 602a, a request message sent by the UE is acquired.

In an embodiment of the present disclosure, the request message is configured to request a reference signal mode, and/or to request reference signal configuration information of at least one reference signal corresponding to the reference signal mode requested by the UE.

Regarding the detailed description of the steps 601a-602a, reference may be made to the description of the above embodiments, which will not be repeated here in embodiments of the present disclosure.

In the step 603a, a designated reference signal is sent to the UE directly based on a reference signal mode and/or reference signal configuration information requested by the request message.

In an embodiment of the present disclosure, when the request message in the step 602 may include at least one of:
first indication information configured to indicate the reference signal mode requested by the UE;
second indication information configured to indicate the reference signal configuration information corresponding to the reference signal mode requested by the UE; or
a time domain position corresponding to the reference signal configuration information requested by the UE,
sending the designated reference signal to the UE directly based on the reference signal mode and/or the reference signal configuration information requested by the request message may include: sending, at the time domain position, the designated reference signal to the UE directly based on the request message and a reference signal mode corresponding to the first indication information and/or reference signal configuration information corresponding to the second indication information.

In another embodiment of the present disclosure, when the request message in the step 602 includes at least one of:
first indication information configured to indicate the reference signal mode requested by the UE;
second indication information configured to indicate the reference signal configuration information corresponding to the reference signal mode requested by the UE;
a configuration period for the configuration information by the network device recommended by the UE;
a first time domain position of reference signal configuration information corresponding to the first reference signal mode within the configuration period recommended by the UE; or
a second time domain position of reference signal configuration information corresponding to the second reference signal mode within the configuration period recommended by the UE,
sending the designated reference signal to the UE directly based on the reference signal mode and/or the reference signal configuration information requested by the request message may include: periodically sending the designated reference signal to the UE according to a first time domain position, a second time domain position and the configuration period.

Regarding other detailed description of the step 603a, reference may be made to the description of the above embodiments, which will not be repeated here in embodiments of the present disclosure.

In summary, in the method for estimating the channel provided in the embodiments of the present disclosure, the UE will first determine the configuration information, which includes the reference signal mode supported by the network device, and/or the reference signal configuration information of the at least one reference signal corresponding to the reference signal mode supported by the network device; the UE will send the request message to the network device, and the request message is configured to request the reference signal mode, and/or to request the reference signal configuration information of the at least one reference signal corresponding to the reference signal mode requested by the UE; and thereafter, the UE will acquire the designated reference signal sent by the network device, and will perform the corresponding operation based on the designated reference signal to perform the channel estimation. Therefore, the embodiments of the present disclosure provide the method for estimating the channel based on AI and/or ML, which can improve the channel estimation performance and ensure the accuracy and precision of the channel estimation.

FIG. 6b is a schematic flowchart of a method for estimating a channel provided by an embodiment of the present disclosure. The method is performed by a network device and may be configured for downlink channel estimation. As shown in FIG. 6b, the method may include steps 601b to 604b.

In the step 601b, configuration information is sent to a UE.

In an embodiment of the present disclosure, the configuration information may include a reference signal mode supported by the network device, and/or reference signal configuration information of at least one reference signal corresponding to the reference signal mode supported by the network device.

In the step 602b, a request message sent by the UE is acquired.

In an embodiment of the present disclosure, the request message is configured to request a reference signal mode, and/or to request reference signal configuration information of at least one reference signal corresponding to the reference signal mode requested by the UE.

In the step 603b, a designated reference signal is sent to the UE directly based on a reference signal mode and/or reference signal configuration information requested by the request message.

In the step 604b, a designated reference signal mode and/or designated reference signal configuration information corresponding to the designated reference signal are sent to the UE.

Regarding the detailed description of the steps 601b-604b, reference may be made to the description of the above embodiments, which will not be repeated here in embodiments of the present disclosure.

In summary, in the method for estimating the channel provided in the embodiments of the present disclosure, the UE will first determine the configuration information, which includes the reference signal mode supported by the network device, and/or the reference signal configuration information of the at least one reference signal corresponding to the reference signal mode supported by the network device; the UE will send the request message to the network device, and the request message is configured to request the reference signal mode, and/or to request the reference signal configuration information of the at least one reference signal corresponding to the reference signal mode requested by the UE; and thereafter, the UE will acquire the designated reference signal sent by the network device, and will perform the corresponding operation based on the designated reference signal to perform the channel estimation. Therefore, the embodiments of the present disclosure provide the method for estimating the channel based on AI and/or ML, which can improve the channel estimation performance and ensure the accuracy and precision of the channel estimation.

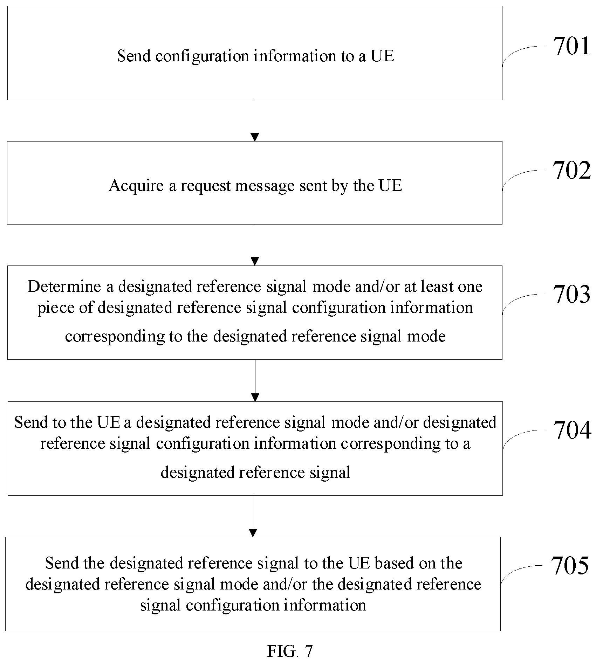

FIG. 7 is a schematic flowchart of a method for estimating a channel provided by an embodiment of the present disclosure. The method is performed by a network device and may be configured for downlink channel estimation. As shown in FIG. 7, the method may include steps 701 to 705.

In the step 701, configuration information is sent to a UE.

In an embodiment of the present disclosure, the configuration information may include a reference signal mode supported by the network device, and/or reference signal configuration information of at least one reference signal corresponding to the reference signal mode supported by the network device.

In the step 702, a request message sent by the UE is acquired.

In an embodiment of the present disclosure, the request message is configured to request a reference signal mode, and/or to request reference signal configuration information of at least one reference signal corresponding to the reference signal mode requested by the UE.

In the step 703, a designated reference signal mode and/or at least one piece of designated reference signal configuration information corresponding to the designated reference signal mode are determined.

In an embodiment of the present disclosure, the designated reference signal configuration information is different from the reference signal configuration information requested by the UE, the designated reference signal mode is the same as or different from the reference signal mode requested by the UE, and the designated reference signal mode is a reference signal mode supported by the UE, and the designated reference signal configuration information is reference signal configuration information supported by the UE.

In the step 704, a designated reference signal mode and/or designated reference signal configuration information corresponding to the designated reference signal are sent to the UE.

In the step 705, the designated reference signal is sent to the UE based on the designated reference signal mode and/or the designated reference signal configuration information.

Regarding the detailed description of the steps 701-705, reference may be made to the description of the above embodiments, which will not be repeated here in embodiments of the present disclosure.

In summary, in the method for estimating the channel provided in the embodiments of the present disclosure, the UE will first determine the configuration information, which includes the reference signal mode supported by the network device, and/or the reference signal configuration information of the at least one reference signal corresponding to the reference signal mode supported by the network device; the UE will send the request message to the network device, and the request message is configured to request the reference signal mode, and/or to request the reference signal configuration information of the at least one reference signal corresponding to the reference signal mode requested by the UE; and thereafter, the UE will acquire the designated reference signal sent by the network device, and will perform the corresponding operation based on the designated reference signal to perform the channel estimation. Therefore, the embodiments of the present disclosure provide the method for estimating the channel based on AI and/or ML, which can improve the channel estimation performance and ensure the accuracy and precision of the channel estimation.

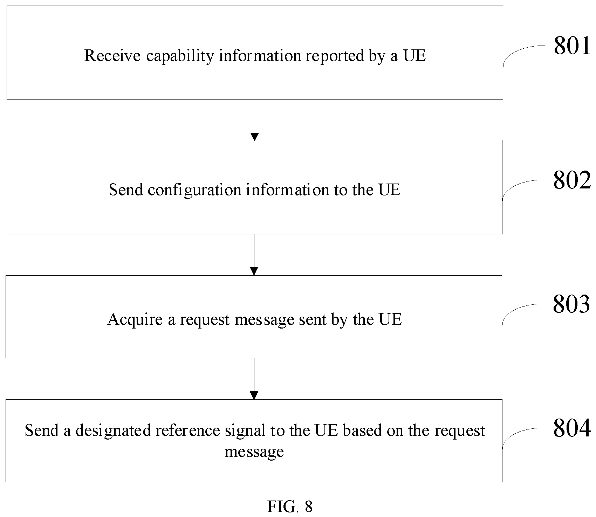

FIG. 8 is a schematic flowchart of a method for estimating a channel provided by an embodiment of the present disclosure. The method is performed by a network device and may be configured for downlink channel estimation. As shown in FIG. 8, the method may include steps 801 to 804.

In the step 801, capability information reported by a UE is received.

In an embodiment of the present disclosure, the capability information may be configured to indicate whether the UE supports a capability for the channel estimation based on AI and/or ML.

In the step 802, configuration information is sent to the UE.

In an embodiment of the present disclosure, when the capability information indicates that the UE supports the capability for the channel estimation based on AI and/or ML, the configuration information is sent to the UE.

In the step 803, a request message sent by the UE is acquired.

In an embodiment of the present disclosure, the request message is configured to request a reference signal mode, and/or to request reference signal configuration information of at least one reference signal corresponding to the reference signal mode requested by the UE.

In the step 804, a designated reference signal is sent to the UE based on the request message.

Regarding the detailed description of the steps 801-804, reference may be made to the description of the above embodiments, which will not be repeated here in embodiments of the present disclosure.

In summary, in the method for estimating the channel provided in the embodiments of the present disclosure, the UE will first determine the configuration information, which includes the reference signal mode supported by the network device, and/or the reference signal configuration information of the at least one reference signal corresponding to the reference signal mode supported by the network device; the UE will send the request message to the network device, and the request message is configured to request the reference signal mode, and/or to request the reference signal configuration information of the at least one reference signal corresponding to the reference signal mode requested by the UE; and thereafter, the UE will acquire the designated reference signal sent by the network device, and will perform the corresponding operation based on the designated reference signal to perform the channel estimation. Therefore, the embodiments of the present disclosure provide the method for estimating the channel based on AI and/or ML, which can improve the channel estimation performance and ensure the accuracy and precision of the channel estimation.

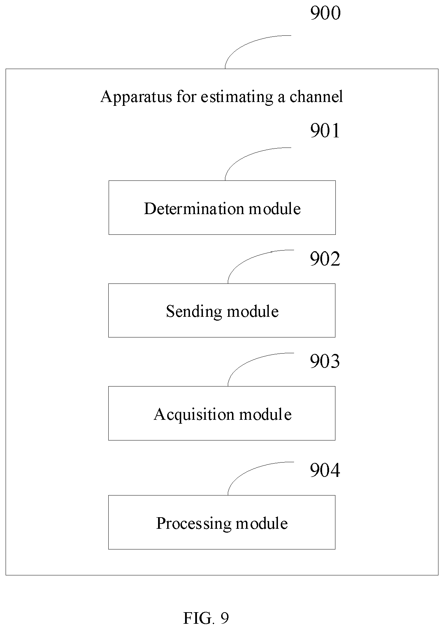

FIG. 9 is a schematic structural diagram of an apparatus for estimating a channel provided by an embodiment of the present disclosure. As shown in FIG. 9, the apparatus may include:
a determination module, configured to determine configuration information, and the configuration information includes a reference signal mode supported by a network device and/or reference signal configuration information of at least one reference signal corresponding to the reference signal mode supported by the network device;
a sending module, configured to send a request message to the network device, and the request message is configured to request a reference signal mode and/or to request reference signal configuration information of at least one reference signal corresponding to the reference signal mode requested by the UE;
an acquisition module, configured to acquire a designated reference signal sent by the network device; and
a processing module, configured to perform a corresponding operation based on the designated reference signal to perform channel estimation.

In summary, in the apparatus for estimating the channel provided by the embodiments of the present disclosure, the UE will first determine the configuration information, which includes the reference signal mode supported by the network device, and/or the reference signal configuration information of the at least one reference signal corresponding to the reference signal mode supported by the network device; the UE will send the request message to the network device, and the request message is configured to request the reference signal mode, and/or to request the reference signal configuration information of the at least one reference signal corresponding to the reference signal mode requested by the UE; and thereafter, the UE will acquire the designated reference signal sent by the network device, and will perform the corresponding operation based on the designated reference signal to perform the channel estimation. Therefore, the embodiments of the present disclosure provide the method for estimating the channel based on AI and/or ML, which can improve the channel estimation performance and ensure the accuracy and precision of the channel estimation.

In an embodiment of the present disclosure, the reference signal mode includes at least one of:
a first reference signal mode, a reference signal corresponding to the first reference signal mode is configured to train an Artificial Intelligent (AI) model and/or to train a Machine Learning (ML) model, and the AI model is configured to implement the channel estimation based on the reference signal, and the ML model is configured to implement the channel estimation based on the reference signal; or
a second reference signal mode, a function of a reference signal corresponding to the second reference signal mode includes at least one of being configured to train the AI model, being configured to train the ML model, being configured to evaluate the AI model, being configured to evaluate the ML model, being configured to perform the channel estimation based on the AI model, or being configured to perform the channel estimation based on the ML model.

In an embodiment of the present disclosure, the reference signal configuration information includes at least one of:
a reference signal pattern of the reference signal; or
a reference signal sequence of the reference signal.

In an embodiment of the present disclosure, the apparatus is further configured to:
report capability information to the network device, and the capability information is configured to indicate whether a capability for the channel estimation based on AI and/or ML is supported by the UE; and
the capability information is configured to indicate at least one of:
   whether an AI-based channel estimation capability is supported by the UE;
   whether a ML-based channel estimation capability is supported by the UE;
   whether data transmission during training of the AI model is supported by the UE; or
   whether data transmission during training of the ML model is supported by the UE.

In an embodiment of the present disclosure, the determination module is further configured to:
determine the configuration information based on a protocol agreement; or
acquire the configuration information sent by the network device.

In an embodiment of the present disclosure, the sending module is further configured to:
send the request message to the network device through a signaling.

In an embodiment of the present disclosure, the request message includes at least one of:
first indication information configured to indicate the reference signal mode requested by the UE;
second indication information configured to indicate the reference signal configuration information corresponding to the reference signal mode requested by the UE; or
a time domain position corresponding to the reference signal configuration information requested by the UE.

In an embodiment of the present disclosure, the request message includes at least one of:
first indication information configured to indicate the reference signal mode requested by the UE;
second indication information configured to indicate the reference signal configuration information corresponding to the reference signal mode requested by the UE;
a configuration period for the configuration information by the network device recommended by the UE;
a first time domain position of reference signal configuration information corresponding to the first reference signal mode within the configuration period recommended by the UE; or
a second time domain position of reference signal configuration information corresponding to the second reference signal mode within the configuration period recommended by the UE.

In an embodiment of the present disclosure, designated reference signal configuration information of the designated reference signal is the same as the reference signal configuration information requested by the UE.

In an embodiment of the present disclosure, the acquisition module is further configured to:
acquire the designated reference signal configuration information corresponding to the designated reference signal and/or a designated reference signal mode corresponding to the designated reference signal sent by the network device; and
acquire the designated reference signal based on the designated reference signal configuration information or the reference signal configuration information requested by the UE.

In an embodiment of the present disclosure, the acquisition module is further configured to:
when the designated reference signal configuration information corresponding to the designated reference signal and/or a designated reference signal mode corresponding to the designated reference signal sent by the network device are not received by the UE within a preset time period, acquire the designated reference signal based on the reference signal configuration information requested by the UE.

In an embodiment of the present disclosure, the designated reference signal configuration information of the designated reference signal is different from the reference signal configuration information requested by the UE.

In an embodiment of the present disclosure, the acquisition module is further configured to:
acquire the designated reference signal configuration information corresponding to the designated reference signal and/or a designated reference signal mode corresponding to the designated reference signal sent by the network device, the designated reference signal mode is a reference signal mode supported by the UE, and the designated reference signal configuration information is reference signal configuration information supported by the UE; and
acquire the designated reference signal based on the designated reference signal configuration information.

In an embodiment of the present disclosure, the processing module is further configured such that:
when a reference signal mode corresponding to the designated reference signal is the first reference signal mode, the corresponding operation includes: training, by the UE, the AI model based on the reference signal, and/or training, by the UE, the ML model based on the reference signal; and
when the reference signal mode corresponding to the designated reference signal is the second reference signal mode, the corresponding operation includes at least one of:
   training, by the UE, the AI model based on the reference signal;
   training, by the UE, the ML model based on the reference signal;
   performing, by the UE, the channel estimation based on the reference signal and the AI model;
   performing, by the UE, the channel estimation based on the reference signal and the ML model;
   evaluating, by the UE, the AI model based on the reference signal; or
   evaluating, by the UE, the ML model based on the reference signal.

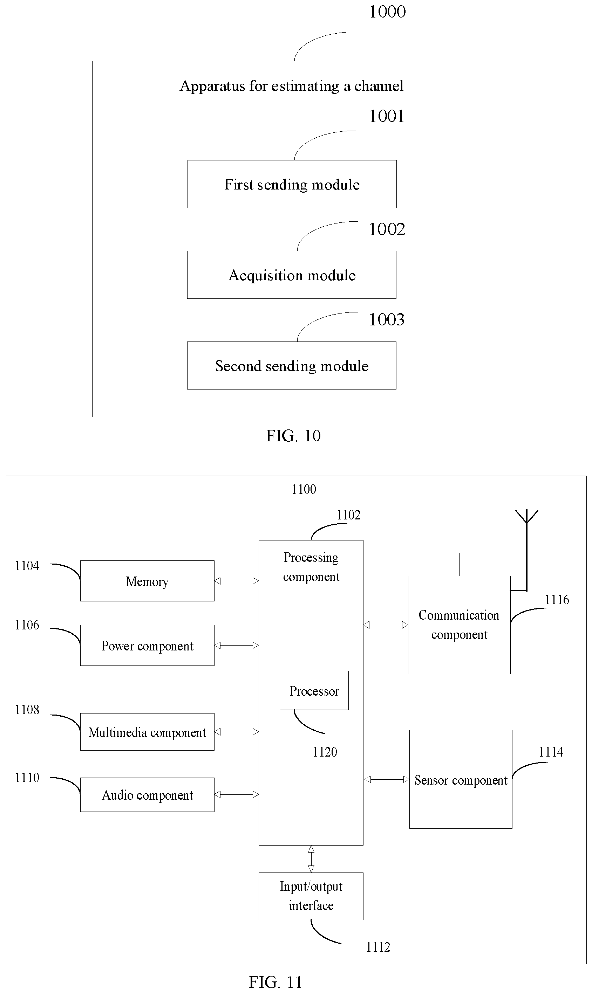

FIG. 10 is a schematic structural diagram of an apparatus for estimating a channel provided by an embodiment of the present disclosure. As shown in FIG. 10, the apparatus may include:
a first sending module, configured to send configuration information to a UE, and the configuration information includes a reference signal mode supported by a network device and/or reference signal configuration information of at least one reference signal corresponding to the reference signal mode supported by the network device;
an acquisition module, configured to acquire a request message sent by the UE, and the request message is configured to request a reference signal mode and/or to request reference signal configuration information of at least one reference signal corresponding to the reference signal mode requested by the UE; and
a second sending module, configured to send a designated reference signal to the UE based on the request message.

In summary, in the apparatus for estimating the channel provided by the embodiments of the present disclosure, the UE will first determine the configuration information, which includes the reference signal mode supported by the network device, and/or the reference signal configuration information of the at least one reference signal corresponding to the reference signal mode supported by the network device; the UE will send the request message to the network device, and the request message is configured to request the reference signal mode, and/or to request the reference signal configuration information of the at least one reference signal corresponding to the reference signal mode requested by the UE; and thereafter, the UE will acquire the designated reference signal sent by the network device, and will perform the corresponding operation based on the designated reference signal to perform the channel estimation. Therefore, the embodiments of the present disclosure provide the method for estimating the channel based on AI and/or ML, which can improve the channel estimation performance and ensure the accuracy and precision of the channel estimation.

In an embodiment of the present disclosure, the reference signal mode includes at least one of:
a first reference signal mode, a reference signal corresponding to the first reference signal mode is configured to train an AI model and/or to train a Machine Learning (ML) model, and the AI model is configured to implement the channel estimation based on the reference signal, and the ML model is also configured to implement the channel estimation based on the reference signal; or
a second reference signal mode, a function of a reference signal corresponding to the second reference signal mode includes at least one of being configured to train the AI, being configured to train the ML model, being configured to evaluate the AI model, being configured to evaluate the ML model, being configured to perform the channel estimation based on the AI model, or being configured to perform the channel estimation based on the ML model.

In an embodiment of the present disclosure, the reference signal configuration information includes at least one of:
a reference signal pattern of the reference signal; or
a reference signal sequence of the reference signal.

In an embodiment of the present disclosure, the apparatus is further configured to:
receive capability information reported by the UE, and the capability information is configured to indicate whether a capability for the channel estimation based on AI and/or ML is supported by the UE; and
the capability information is configured to indicate at least one of:
   whether an AI-based channel estimation capability is supported by the UE;
   whether a ML-based channel estimation capability is supported by the UE;
   whether data transmission during training of the AI model is supported by the UE; or
   whether data transmission during training of the ML model is supported by the UE.

In an embodiment of the present disclosure, the first sending module is further configured to:
when the capability information indicates that a capability for the channel estimation based on AI and/or ML is supported by the UE, send the configuration information to the UE.

In an embodiment of the present disclosure, the acquisition module is further configured to:
acquire the request message sent, through a signaling, by the UE.

In an embodiment of the present disclosure, the request message includes at least one of:
first indication information configured to indicate the reference signal mode requested by the UE;
second indication information configured to indicate the reference signal configuration information corresponding to the reference signal mode requested by the UE; or
a time domain position corresponding to reference signal configuration information requested by the UE.

In an embodiment of the present disclosure, the second sending module is further configured to:
send to the UE, at the time domain position, the reference signal based on the reference signal mode corresponding to the first indication information and/or the reference signal configuration information corresponding to the second indication information

In an embodiment of the present disclosure, the request message includes at least one of:
first indication information configured to indicate the reference signal mode requested by the UE;
second indication information configured to indicate the reference signal configuration information corresponding to the reference signal mode requested by the UE;
a configuration period for the configuration information by the network device recommended by the UE;
a first time domain position of reference signal configuration information corresponding to the first reference signal mode within the configuration period recommended by the UE; or
a second time domain position of reference signal configuration information corresponding to the second reference signal mode within the configuration period recommended by the UE.

In an embodiment of the present disclosure, the second sending module is further configured to:
send the designated reference signal to the UE based on the reference signal mode and/or the reference signal configuration information requested by the request message.

In an embodiment of the present disclosure, the second sending module is further configured to:
determine a designated reference signal mode and/or at least one piece of designated reference signal configuration information corresponding to the designated reference signal mode, the designated reference signal configuration information is different from reference signal configuration information requested by the UE, the designated reference signal mode is the same as or different from the reference signal mode requested by the UE, and the designated reference signal mode is a reference signal mode supported by the UE, and the designated reference signal configuration information is reference signal configuration information supported by the UE; and
send the designated reference signal to the UE based on the designated reference signal mode and/or the designated reference signal configuration information.

In an embodiment of the present disclosure, the apparatus is further configured to:
send to the UE the designated reference signal mode and/or the designated reference signal configuration information corresponding to the designated reference signal.

FIG. 11 is a block diagram of a User Equipment (UE) 1100 provided by an embodiment of the present disclosure. For example, the UE 1100 may be a mobile phone, a computer, a digital broadcast terminal device, a messaging device, a gaming console, a tablet, a medical device, an exercise device, a personal digital assistant, etc.

Referring to FIG. 11, the UE 1100 may include at least one of the following components: a processing component 1102, a memory 1104, a power component 1106, a multimedia component 1108, an audio component 1110, an input/output (I/O) interface 1112, a sensor component 1113, and a communication component 1116.

The processing component 1102 typically controls overall operations of the UE 1100, such as the operations associated with display, telephone calls, data communications, camera operations, and recording operations. The processing component 1102 may include at least one processor 1120 to execute instructions to perform all or part of the steps in the above described methods. Moreover, the processing component 1102 may include at least one module which facilitate the interaction between the processing component 1102 and other components. For instance, the processing component 1102 may include a multimedia module to facilitate the interaction between the multimedia component 1108 and the processing component 1102.

The memory 1104 is configured to store various types of data to support the operation of the UE 1100. Examples of such data include instructions for any applications or methods operated on the UE 1100, contact data, phonebook data, messages, pictures, video, etc. The memory 1104 may be implemented using any type of volatile or non-volatile memory apparatuses, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1106 provides power to various components of the UE 1100. The power component 1106 may include a power management system, at least one power source, and any other components associated with the generation, management, and distribution of power in the UE 1100.

The multimedia component 1108 includes a screen providing an output interface between the UE 1100 and the user. In some embodiments, the screen may include a liquid crystal display (LCD) and a touch panel (TP). If the screen includes the touch panel, the screen may be implemented as a touch screen to receive input signals from the user. The touch panel includes at least one touch sensor to sense touches, swipes, and gestures on the touch panel. The touch sensors may not only sense a boundary of a touch or swipe action, but also sense a wake-up time and a pressure associated with the touch or swipe action. In some embodiments, the multimedia component 1108 includes a front camera and/or a rear camera. The front camera and the rear camera may receive an external multimedia datum while the UE 1100 is in an operation mode, such as a photographing mode or a video mode. Each of the front camera and the rear camera may be a fixed optical lens system or have focus and optical zoom capability.

The audio component 1110 is configured to output and/or input audio signals. For example, the audio component 1110 includes a microphone (MIC) configured to receive an external audio signal when the UE 1100 is in an operation mode, such as a call mode, a recording mode, and a voice recognition mode. The received audio signal may be further stored in the memory 1104 or transmitted via the communication component 1116. In some embodiments, the audio component 1110 further includes a speaker to output audio signals.

The I/O interface 1112 provides an interface between the processing component 1102 and peripheral interface modules, such as a keyboard, a click wheel, buttons, and the like. The buttons may include, but are not limited to, a home button, a volume button, a starting button, and a locking button.

The sensor component 1113 includes at least one sensor to provide state assessments of various aspects of the UE 1100. For instance, the sensor component 1113 may detect an open/closed state of the UE 1100, relative positioning of components, e.g., the display and the keypad, of the UE 1100, a change in position of the UE 1100 or a component of the UE 1100, a presence or absence of user contact with the UE 1100, an orientation or an acceleration/deceleration of the UE 1100, and a change in temperature of the UE 1100. The sensor component 1113 may include a proximity sensor configured to detect the presence of nearby objects without any physical contact. The sensor component 1113 may further include a light sensor, such as a CMOS or CCD image sensor, for use in imaging applications. In some embodiments, the sensor component 1113 may further include an accelerometer sensor, a gyroscope sensor, a magnetic sensor, a pressure sensor, or a temperature sensor.

The communication component 1116 is configured to facilitate communication, wired or wirelessly, between the UE 1100 and other devices. The UE 1100 may access a wireless network based on a communication standard, such as WiFi, 2G, or 3G, or a combination thereof. In an embodiment, the communication component 1116 receives a broadcast signal or broadcast associated information from an external broadcast management system via a broadcast channel. In an embodiment, the communication component 1116 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an embodiment of the present disclosure, the UE 1100 may be implemented with at least one application specific integrated circuit (ASIC), digital signal processor (DSP), digital signal processing device (DSPD), programmable logic device (PLD), field programmable gate array (FPGA), controller, micro-controller, microprocessor, or other electronic components, for performing the above described methods.

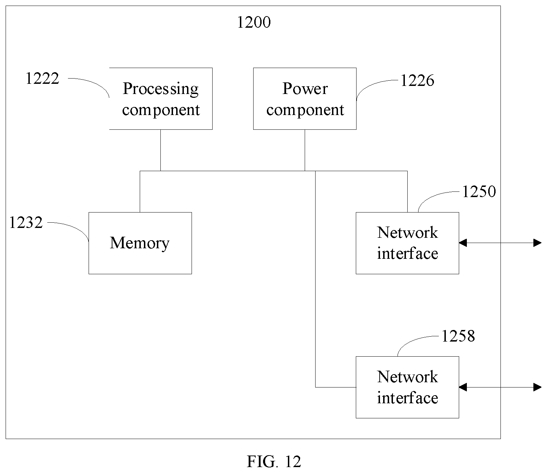

FIG. 12 is a block diagram of a network side device 1200 provided by an embodiment of the present disclosure. For example, the network side device 1200 may be provided as a network device. Referring to FIG. 12, the network side device 1200 includes a processing component 1211, which further includes at least one processor and a memory resource represented by a memory 1232 for storing instructions executable by the processing component 1222, such as an application program. The application program stored in the memory 1232 may include one or more modules, each corresponding to a set of instructions. In addition, the processing component 1222 is configured to execute the instructions to execute the aforementioned any method applied on the network side device, for example, the method shown in FIG. 1.

The network side device 1200 may further include: a power component 1226 configured to perform power management of the network side device 1200, a wired or wireless network interface 1250 configured to connect the network side device 1200 to the network, and an input/output (I/O) interface 1258. The network side device 1200 may operate an operating system stored in the memory 1232, such as Windows Server TM, Mac OS XTM, UnixTM, LinuxTM, FreeBSDTM, or the like.

In the above embodiments provided by the present disclosure, the methods provided by embodiments of the present disclosure are introduced from the perspectives of the network side device and the UE. In order to achieve various functions of the methods provided in embodiments of the present disclosure, the network side device and the UE may include hardware structures and software modules, and the various functions are implemented in the form of hardware structures, software modules, or hardware structures plus software modules. One of the various functions may be implemented in the form of hardware structures, software modules, or hardware structure plus software modules.

In the above embodiments provided by the present disclosure, the methods provided by embodiments of the present disclosure are introduced from the perspectives of the network side device and the UE. In order to achieve various functions of the methods provided in embodiments of the present disclosure, the network side device and the UE may include hardware structures and software modules, and the various functions are implemented in the form of hardware structures, software modules, or hardware structures plus software modules. One of the various functions may be implemented in the form of hardware structures, software modules, or hardware structure plus software modules.

Embodiments of the present disclosure provide a communication device. The communication device may include a transceiver module and a processing module. The transceiver module may include a transmitting module and/or a receiving module. The transmitting module is configured to implement a transmission function, and the receiving module is configured to implement a reception function. The transceiver module may implement the transmission function and/or the reception function.

The communication device may be a terminal device (such as the UE in the above method embodiments), a device in the terminal device, or a device that can be used in conjunction with the terminal device. Alternatively, the communication device may be a network device, a device in the network device, or a device that can be used in conjunction with the network device.

Embodiments of the present disclosure provide another communication device. The communication device may be a network device, or may be a terminal device (such as the UE in the above method embodiments), or may be a chip, a chip system, a processor or the like that supports the network device to implement the above method, or may be a chip, a chip system, a processor or the like that supports the terminal device to implement the above method. The device can be used to implement the method described in the above method embodiments. For details, reference may be made to the description in the above method embodiments.

The communication device may include one or more processors. The processor may be a general-purpose processor or a dedicated processor, or the like. For example, the processor may be a baseband processor or a central processing unit. The baseband processor can be used to process communication protocols and communication data. The central processor can be used to control the communication devices (such as network side devices, baseband chips, terminal devices, terminal device chips, DU or CU, or the like), execute computer programs, and process data for the computer programs.

In embodiments of the present disclosure, the communication device may further include one or more memories, on which a computer program may be stored. The processor executes the computer program, so that the communication device performs the method described in the above method embodiments. In embodiments of the present disclosure, the memory may also store data. The communication device and the memory can be provided separately or integrated together.

In embodiments of the present disclosure, the communication device may further include a transceiver and an antenna. The transceiver may be referred to as a transceiver unit, a transceiver, a transceiver circuit, or the like, and is used to implement transceiver functions. The transceiver may include a receiver and a transmitter. The receiver may be referred to as a receiver or a receiving circuit, or the like, and is used to implement the receiving function; and the transmitter may be referred to as a transmitter, a transmitting circuit, or the like, and is used to implement the transmitting function.

In embodiments of the present disclosure, the communication device may further include one or more interface circuits. The interface circuit is used to receive code instructions and transmit the code instructions to the processor. The processor executes the code instructions to cause the communication device to perform the method described in the above method embodiments.

The communication device is a terminal device (such as the UE in the foregoing method embodiments), and the processor is configured to execute the method shown in any one of FIGS. 1-4.

The communication device is a network device, and the transceiver is configured to execute the method shown in any one of FIGS. 5-7.

In an implementation of the present disclosure, the processor may include a transceiver for implementing receiving and transmitting functions. For example, the transceiver may be a transceiver circuit, an interface, or an interface circuit. The transceiver circuits, interfaces or interface circuits used to implement the receiving and transmitting functions can be separate or integrated together. The transceiver circuit, interface or interface circuit can be used for reading and writing codes/data, or the transceiver circuit, interface or interface circuit can be used for signal transmission or transfer.

In an implementation of the present disclosure, the processor may be stored with a computer program, and the computer program is performed by the processor, causing the communication device to perform the method described in the above method embodiments. The computer program may be solidified in the processor, in which case the processor may be implemented by hardware.

In an implementation of the present disclosure, the communication device may include a circuit, and the circuit may implement the functions of sending or receiving or communicating in the foregoing method embodiments. The processors and transceivers described in the present disclosure may be implemented on an integrated circuit (IC), an analog IC, a radio frequency integrated circuit (RFIC), a mixed signal IC, an application specific integrated circuit (ASIC), a printed circuit boards (PCB), an electronic device, and the like. The processor and transceiver can also be manufactured using various IC process technologies, such as complementary metal oxide semiconductor (CMOS), N-type metal oxide semiconductor (nMetal-oxide-semiconductor, NMOS), P-type metal oxide semiconductor (positive channel metal oxide semiconductor, PMOS), bipolar junction transistor (BJT), bipolar CMOS (BiCMOS), silicon germanium (SiGe), gallium arsenide (GaAs), and the like.

The communication device described in the above embodiments may be the network device or the terminal device (e.g., the UE in the above method embodiments), but the scope of the communication device described in the present disclosure is not limited thereto, and the structure of the communication device may not be limited. The communication device may be a stand-alone device or may be part of a larger device. For example, the communication device may be:
(1) a stand-alone integrated circuit IC, or chip, or chip system or subsystem;
(2) a set of one or more ICs. In embodiments of the present disclosure, the IC set may further include storage components for storing data and computer programs;
(3) an ASIC, such as a modem;
(4) a module that can be embedded in another device;
(5) a receiver, a terminal device, an intelligent terminal device, a cellular phone, a wireless device, a handheld device, a mobile unit, a vehicle-mounted device, a network device, a cloud device, an artificial intelligence device, and the like;
(6) others, etc.

In a case that the communication device may be a chip or a system on a chip, the chip includes a processor and an interface. The number of processors may be one or more, and the number of interfaces may be multiple.

In an embodiment of the present disclosure, the chip further includes a memory, and the memory is configured to store necessary computer programs and data.

Those skilled in the art can also understand that the various illustrative logical blocks and steps listed in the embodiments of the present disclosure can be implemented by electronic hardware, computer software, or a combination of both. Whether such functionality is implemented in hardware or software depends on the specific application and overall system design requirements. Those skilled in the art can use various methods to implement the described functions for each specific application, but such implementation should not be understood as exceeding the scope of protection of the embodiments of the present disclosure.

Embodiments of the present disclosure further provide a system for determining a sidelink duration. The system includes the communication device as the terminal device (such as the first UE in the above method embodiments) and the communication device as the network device in the above embodiments, or the system includes the communication device as the terminal device (such as the first UE in the above method embodiments) and the communication device as the network device in the above embodiments.

The present disclosure further provides a readable storage medium on which instructions are stored. When the instructions are performed by a computer, the functions of any of the above method embodiments are implemented.

The present disclosure further provides a computer program product, which, when been performed by a computer, implements the functions of any of the above method embodiments.

In the above embodiments, it may be implemented in whole or in part by software, hardware, firmware, or any combination thereof. When implemented by software, it may be implemented in whole or in part in the form of a computer program product. The computer program product includes one or more computer programs. When the computer program is loaded and executed on a computer, the processes or functions described in accordance with the embodiments of the present disclosure are generated in whole or in part. The computer may be a general-purpose computer, a dedicated computer, a computer network, or other programmable device. The computer program may be stored in a computer-readable storage medium, or been transferred from one computer-readable storage medium to another, for example, the computer program may be transferred from a website, computer, server, or data center to another website, computer, server or data center via wired (such as coaxial cable, optical fiber, digital subscriber line (DSL)) or wireless (such as infrared, wireless, microwave, or the like) means. The computer-readable storage medium may be any available medium that can be accessed by a computer, or a data storage device such as an integrated server, data center, or the like, that includes one or more available media. The available media may be magnetic media (e.g., floppy disks, hard disks, magnetic tapes), optical media (e.g., high-density digital video discs (DVD)), or semiconductor media (e.g., solid state disks, SSD)) or the like.

Those of ordinary skill in the art can understand that the first, second, and other numerical numbers involved in the present disclosure are only distinctions made for convenience of description and are not used to limit the scope of the embodiments of the disclosure, nor to indicate the order.

At least one in the present disclosure can also be described as one or more, and the plurality can be two, three, four or more, which is not limited in the present disclosure. In the embodiment of the present disclosure, for one type of technical feature, "first", "second", "third", "A", "B", "C" and "D", or the like are used to distinguish the technical features in the type of technical feature, and the technical features described with "first", "second", "third", "A", "B", "C" and "D" are in no order of precedence or order of size.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and including the common general knowledge or habitual technical means in the technical field not disclosed in the present disclosure. The specification and embodiments are considered as exemplary only, and a true scope and spirit of the present disclosure is indicated by the appending claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

## Claims

1. A method for estimating a channel, performed by a User Equipment (UE) and configured for downlink channel estimation, and comprising:
determining configuration information, wherein the configuration information comprises a reference signal mode supported by a network device and/or reference signal configuration information of at least one reference signal corresponding to the reference signal mode supported by the network device;
sending a request message to the network device, wherein the request message is configured to request a reference signal mode and/or to request reference signal configuration information of at least one reference signal corresponding to the reference signal mode requested by the UE;
acquiring a designated reference signal sent by the network device; and
performing a corresponding operation based on the designated reference signal to perform channel estimation.

2. The method according to claim 1, wherein the reference signal mode comprises at least one of:
a first reference signal mode, wherein a reference signal corresponding to the first reference signal mode is configured to train an Artificial Intelligent (AI) model and/or to train a Machine Learning (ML) model, and wherein the AI model is configured to implement the channel estimation based on the reference signal, and the ML model is configured to implement the channel estimation based on the reference signal; or
a second reference signal mode, wherein a function of a reference signal corresponding to the second reference signal mode comprises at least one of being configured to train the AI model, being configured to train the ML model, being configured to evaluate the AI model, being configured to evaluate the ML model, being configured to perform the channel estimation based on the AI model, or being configured to perform the channel estimation based on the ML model.

3. The method according to claim 1, wherein the reference signal configuration information comprises at least one of:
a reference signal pattern of the reference signal; or
a reference signal sequence of the reference signal.

4. The method according to claim 2, wherein the method further comprises:
reporting capability information to the network device, wherein the capability information is configured to indicate whether a capability for the channel estimation based on AI and/or ML is supported by the UE; and
the capability information is configured to indicate at least one of:
whether an AI-based channel estimation capability is supported by the UE;
whether a ML-based channel estimation capability is supported by the UE;
whether data transmission during training of the AI model is supported by the UE; or
whether data transmission during training of the ML model is supported by the UE.

5. The method according to claim 1 or 4, wherein the method for determining the configuration information comprises at least one of:
determining the configuration information based on a protocol agreement; or
acquiring the configuration information sent by the network device.

6. The method according to claim 1 or 4, wherein the sending the request message to the network device comprises:
sending the request message to the network device through a signaling.

7. The method according to claim 6, wherein the request message comprises at least one of:
first indication information configured to indicate the reference signal mode requested by the UE;
second indication information configured to indicate the reference signal configuration information corresponding to the reference signal mode requested by the UE; or
a time domain position corresponding to reference signal configuration information requested by the UE.

8. The method according to claim 6, wherein the request message comprises at least one of:
first indication information configured to indicate the reference signal mode requested by the UE;
second indication information configured to indicate the reference signal configuration information corresponding to the reference signal mode requested by the UE;
a configuration period for the configuration information by the network device recommended by the UE;
a first time domain position of reference signal configuration information corresponding to the first reference signal mode within the configuration period recommended by the UE; or
a second time domain position of reference signal configuration information corresponding to the second reference signal mode within the configuration period recommended by the UE.

9. The method according to claim 2 or 4, wherein designated reference signal configuration information of the designated reference signal is the same as reference signal configuration information requested by the UE.

10. The method according to claim 9, wherein the acquiring the reference signal sent by the network device comprises:
acquiring the designated reference signal configuration information corresponding to the designated reference signal and/or a designated reference signal mode corresponding to the designated reference signal sent by the network device; and
acquiring the designated reference signal based on the designated reference signal configuration information or the reference signal configuration information requested by the UE.

11. The method according to claim 9, wherein the acquiring the reference signal sent by the network device comprises:
when the designated reference signal configuration information corresponding to the designated reference signal and/or a designated reference signal mode corresponding to the designated reference signal sent by the network device are not received by the UE within a preset time period, acquiring the designated reference signal based on the reference signal configuration information requested by the UE.

12. The method according to claim 2 or 4, wherein designated reference signal configuration information of the designated reference signal is different from reference signal configuration information requested by the UE.

13. The method according to claim 12, wherein the acquiring the reference signal sent by the network device comprises:
acquiring the designated reference signal configuration information corresponding to the designated reference signal and/or a designated reference signal mode corresponding to the designated reference signal sent by the network device, wherein the designated reference signal mode is a reference signal mode supported by the UE, and the designated reference signal configuration information is reference signal configuration information supported by the UE; and
acquiring the designated reference signal based on the designated reference signal configuration information.

14. The method according to claim 10, 11 or 13, wherein the performing the corresponding operation based on the designated reference signal comprises:
when a reference signal mode corresponding to the designated reference signal is the first reference signal mode, the corresponding operation comprises: training, by the UE, the AI model based on the reference signal, and/or training, by the UE, the ML model based on the reference signal; and
when the reference signal mode corresponding to the designated reference signal is the second reference signal mode, the corresponding operation comprises at least one of:
training, by the UE, the AI model based on the reference signal;
training, by the UE, the ML model based on the reference signal;
performing, by the UE, the channel estimation based on the reference signal and the AI model;
performing, by the UE, the channel estimation based on the reference signal and the ML model;
evaluating, by the UE, the AI model based on the reference signal; or
evaluating, by the UE, the ML model based on the reference signal.

15. A method for estimating a channel, performed by a network device and configured for downlink channel estimation, and comprising:
sending configuration information to a UE, wherein the configuration information comprises a reference signal mode supported by a network device and/or reference signal configuration information of at least one reference signal corresponding to the reference signal mode supported by the network device;
acquiring a request message sent by the UE, wherein the request message is configured to request a reference signal mode and/or to request reference signal configuration information of at least one reference signal corresponding to the reference signal mode requested by the UE; and
sending a designated reference signal to the UE based on the request message.

16. The method according to claim 15, wherein the reference signal mode comprises at least one of:
a first reference signal mode, wherein a reference signal corresponding to the first reference signal mode is configured to train an AI model and/or to train a Machine Learning (ML) model, and wherein the AI model is configured to implement the channel estimation based on the reference signal, and the ML model is also configured to implement the channel estimation based on the reference signal; or
a second reference signal mode, wherein a function of a reference signal corresponding to the second reference signal mode comprises at least one of being configured to train the AI, being configured to train the ML model, being configured to evaluate the AI model, being configured to evaluate the ML model, being configured to perform the channel estimation based on the AI model, or being configured to perform the channel estimation based on the ML model.

17. The method according to claim 15, wherein the reference signal configuration information comprises at least one of:
a reference signal pattern of the reference signal; or
a reference signal sequence of the reference signal.

18. The method according to claim 16, wherein the method further comprises:
receiving capability information reported by the UE, wherein the capability information is configured to indicate whether a capability for the channel estimation based on AI and/or ML is supported by the UE; and
the capability information is configured to indicate at least one of:
whether an AI-based channel estimation capability is supported by the UE;
whether a ML-based channel estimation capability is supported by the UE;
whether data transmission during training of the AI model is supported by the UE; or
whether data transmission during training of the ML model is supported by the UE.

19. The method according to claim 18, wherein the sending the configuration information to the UE comprises:
when the capability information indicates that a capability for the channel estimation based on AI and/or ML is supported by the UE, sending the configuration information to the UE.

20. The method according to claim 15 or 18, wherein the acquiring the request message sent by the UE comprises:
acquiring the request message sent, through a signaling, by the UE.

21. The method according to claim 20, wherein the request message comprises at least one of:
first indication information configured to indicate the reference signal mode requested by the UE;
second indication information configured to indicate the reference signal configuration information corresponding to the reference signal mode requested by the UE; or
a time domain position corresponding to reference signal configuration information requested by the UE.

22. The method according to claim 20, wherein the request message comprises at least one of:
first indication information configured to indicate the reference signal mode requested by the UE;
second indication information configured to indicate the reference signal configuration information corresponding to the reference signal mode requested by the UE;
a configuration period for the configuration information by the network device recommended by the UE;
a first time domain position of reference signal configuration information corresponding to the first reference signal mode within the configuration period recommended by the UE; or
a second time domain position of reference signal configuration information corresponding to the second reference signal mode within the configuration period recommended by the UE.

23. The method according to claim 15, wherein the sending the designated reference signal to the UE based on the request message comprises:
sending the designated reference signal to the UE based on the reference signal mode and/or the reference signal configuration information requested by the request message.

24. The method according to claim 15, wherein the sending the designated reference signal to the UE based on the request message comprises:
determining a designated reference signal mode and/or at least one piece of designated reference signal configuration information corresponding to the designated reference signal mode, wherein the designated reference signal configuration information is different from reference signal configuration information requested by the UE, the designated reference signal mode is the same as or different from the reference signal mode requested by the UE, and the designated reference signal mode is a reference signal mode supported by the UE, and the designated reference signal configuration information is reference signal configuration information supported by the UE; and
sending the designated reference signal to the UE based on the designated reference signal mode and/or the designated reference signal configuration information.

25. The method according to claim 23 or 24, wherein the method further comprises:
sending to the UE the designated reference signal mode and/or the designated reference signal configuration information corresponding to the designated reference signal.

26. An apparatus for estimating a channel, comprising:
a determination module, configured to determine configuration information, wherein the configuration information comprises a reference signal mode supported by a network device and/or reference signal configuration information of at least one reference signal corresponding to the reference signal mode supported by the network device;
a sending module, configured to send a request message to the network device, wherein the request message is configured to request a reference signal mode and/or to request reference signal configuration information of at least one reference signal corresponding to the reference signal mode requested by the UE;
an acquisition module, configured to acquire a designated reference signal sent by the network device; and
a processing module, configured to perform a corresponding operation based on the designated reference signal to perform channel estimation.

27. An apparatus for estimating a channel, comprising:
a first sending module, configured to send configuration information to a UE, wherein the configuration information comprises a reference signal mode supported by a network device and/or reference signal configuration information of at least one reference signal corresponding to the reference signal mode supported by the network device;
an acquisition module, configured to acquire a request message sent by the UE, wherein the request message is configured to request a reference signal mode and/or to request reference signal configuration information of at least one reference signal corresponding to the reference signal mode requested by the UE; and
a second sending module, configured to send a designated reference signal to the UE based on the request message.

28. A communication device, comprising a processor and a memory, wherein a computer program is stored in the memory, and the processor executes the computer program stored in the memory to cause the communication device to execute the method according to any one of claims 1 to 14.

29. A communication device, comprising a processor and a memory, wherein a computer program is stored in the memory, and the processor executes the computer program stored in the memory to cause the communication device to execute the method according to any one of claims 15 to 25.

30. A communication device, comprising a processor and an interface circuit; wherein:
the interface circuit is configured to receive code instructions and transmit the code instructions to the processor; and
the processor is configured to run the code instructions to execute the method according to any one of claims 1 to 14.

31. A communication device, comprising a processor and an interface circuit; wherein:
the interface circuit is configured to receive code instructions and transmit the code instructions to the processor; and
the processor is configured to run the code instructions to execute the method according to any one of claims 15 to 25.

32. A computer-readable storage medium having instructions store thereon which, when executed, cause the method according to any one of claims 1 to 14 to be implemented.

33. A computer-readable storage medium having instructions store thereon which, when executed, cause the method according to any one of claims 15 to 25 to be implemented.
